# EUROPEAN PATENT SPECIFICATION

(11) **EP 4 124 956 B1**
(45) Date of publication and mention of the grant of the patent: **11.03.2026**
(21) Application number: 21216110.3
(22) Date of filing: 20.12.2021
(51) Int. Cl.: G06F 11/07, G06F 11/30, G06F 11/34, G06N 20/00

(54) **AUTOMATED SYSTEM AND METHOD FOR DETECTION AND REMEDIATION OF ANOMALIES IN ROBOTIC PROCESS AUTOMATION ENVIRONMENT**
AUTOMATISIERTES SYSTEM UND VERFAHREN ZUR ERKENNUNG UND BEHEBUNG VON ANOMALIEN IN EINER ROBOTISCHEN PROZESSAUTOMATISIERUNGSUMGEBUNG
SYSTÈME AUTOMATISÉ ET PROCÉDÉ DE DÉTECTION ET DE RÉPARATION D'ANOMALIES DANS UN ENVIRONNEMENT D'AUTOMATISATION DE PROCESSUS ROBOTIQUE

(30) Priority: 28.07.2021 IN 202141033943
(43) Date of publication of application: 01.02.2023
(73) Proprietor: Infosys Limited, 560-100 Bangalore (IN)
(72) Inventor: GHAG, Sidharth, Pune (IN); GAONKAR, Amit, Pune (IN); SADHANANTHAM, Ananth, Theni (IT); SURYANARAYANA, Pradeep, Bangalore (IN); TRIVEDI, Hasit, Pune (IN)
(74) Representative: Finnegan Europe LLP

(56) References cited:
- EP-A2- 3 312 725
- WO-A1-2013/006708
- WO-A1-2019/075399
- US-A1- 2010 223 497
- US-A1- 2017 024 285
- US-A1- 2018 205 593
- US-B1- 10 397 236

## Description

### FIELD OF INVENTION

The present technique relates to Robotic Process Automation (RPA). More specifically, the technique relates to automated real-time monitoring of operation in Robotic Process Automation (RPA) environments.

### BACKGROUND

Robotic Process Automation (RPA) is about using 'robots' or the 'bots' to handle repetitive, rule-based digital tasks. RPA bot is a form of intelligent software. RPA deployment in enterprises is fragmented with multiple regions, multiple line of operations, multiple RPA technologies, multiple Control Towers which lead to situation where it is difficult to operate and manage. To scale up digitization program effectively, organizations need to consider early on support requirements for bots. Lack of visibility, high volume of operation failures, fragmented problem management, failing to plan for operation continuity are likely to lead to problems in digitization implementation, inflated expenses, and process failures. To keep up with scalability demands of digitization and managing the demand to support bots, one needs to address key questions such as how to manage and make sure RPA bots are available and performing correctly; how to automate the remediation steps when things go wrong; and how to protect automation investment.

Currently, the support models around the RPA system is primarily incident driven. If the bot or any of its dependencies fail, then an incident is raised and then the support team gets the request assigned who then follows Standard Operating Procedures (SOPs) to investigate, diagnose and subsequently either resolves the issue or if unable to resolve then re-assign it to a relevant team who will be able to resolve the issue. The time taken to bring any of the unhealthy RPA components such as bots, Control Tower etc. into an operationally healthy state could take anywhere between several minutes to hours or even days in some rare cases which could lead to disruptions. Some of the reasons for inability to bring back RPA systems into a healthy state faster could be - (a) delayed reporting of operational health; (b) lack of past knowledge in ability to resolve similar issues; (c) low visibility of all dependent components such as infrastructure, Control Towers, bots etc.; and/or (d) unavailability of support engineers to continuously monitor as they may be multi-tasking or working on some other activity.

Currently, some of the approaches are - Subject Matter Expert (SME) support-based approach (manual) and traditional script-based approach (low automation). In case of SME support-based approach, SME will keep manually viewing the Control Tower dashboards for any issues in the RPA systems. If any issue is reported, then either ticket will be raised by the SME or the SME will go ahead to resolve the issue. Not all components of RPA platform are monitored by the SME - some of the IT components such as servers, VMs, databases may be monitored by different specialized teams. This results in organization getting a siloed view of RPA operations in production. Also, if the issue resolution crosses support boundaries of different teams, then the resolution times could be higher as multiple teams would then need to work together to diagnose the root cause of the issue and apply fixes.

In case of traditional script-based approach, support teams develop various scripts (for example - Powershell) to monitor different RPA components and then report any issues, based on pre-defined logic embedded into code over emails. These scripts are then scheduled in some task scheduler/cron job to run at periodic intervals to monitor RPA components and report state of the components. Some of the shortcomings with this approach are - (a) approach is difficult to scale in large RPA deployments. As RPA deployment grows, managing the scripts by manually configuring them for any new RPA component can be very tedious. Also, any change in the scripts can lead to a high management effort; (b) since the RPA platform is not proactively tracked for any configuration level changes, the monitoring can easily tend to go out of sync. If any component of the RPA platform is decommissioned and the scripts tracking that components are not updated, it may result in large number of false alerts being raised by the monitoring scripts; (c) They are usually characterized by simple single component monitoring and reporting sometimes with simple logic-based check embedded in code to detect anomalies. Such scripts are found to lack ability to diagnose or troubleshoot for root causes in case of issues which are complex in nature which requires analyzing log files or issues in other dependent components; and (d) scripts need to be re-configured and modified for every different instance of the RPA platform deployed in the organization.

Published patent application US2010223497 teaches detecting deviation above a threshold when monitoring resource usage and taking a corrective action to remedy the anomaly detected.

Published patent application US2018205593 teaches detecting deviation above a threshold when monitoring resource usage and taking a corrective action to remedy the anomaly detected.

Published patent application WO2013006708 discloses primarily detecting VM performance deviation above a threshold, and in one embodiment monitoring resource usage rather than performance, and taking a corrective action to remedy the anomaly detected.

Published patent application WO2019075399 discloses training an resource usage anomaly detection model based on resource usage; training comprises threshold determination.

None of the cited prior arts document discloses the specific RPA component and dependent components discovery process as is described in paragraph [0066] of the filed patent application.

### SUMMARY

As highlighted in the background section, in SME support-based approach (manual), if a server in the RPA environment needs to be monitored (for example) then the SME manually checks if servers are accessible, bot can run and perform required task. In case of bot monitoring (for example), bot status (active/ disabled/ deleted), last run status, error messages, average response time, SLA validations are checked manually. In case of services monitoring, the SME manually checks whether all required services are running on servers, all required services are running on client machines and restart the service if any service is not running/functioning.

In addition to problems mentioned in the background section, the existing systems lack self-healing/corrective actions based on proactive tracking. Also, the existing systems are usually characterized by simple single component monitoring and reporting sometimes with simple logic-based check embedded in code to detect anomalies. Such scripts are found to lack ability to diagnose or troubleshoot for root causes in case of issues which are complex in nature which requires analyzing log files or issues in other dependent components. The technology described in the present disclosure overcomes the above-mentioned technical problem through a system for automated detection and automated remediation of anomalies in a Robotic Process Automation (RPA) environment. The disclosed technology addresses the technical problem through a technical solution by moving from reactive to proactive approach of Managing RPA Platforms by having an end-to-end visibility of the health of all RPA components and their dependencies, proactively detect anomalies in any monitoring parameter or logs and then take corrective automated actions to bring back any non-working, unhealthy RPA component or its dependencies into a working, healthy state. The system continuously monitors RPA platforms and its dependent ecosystem, diagnoses failure of RPA components and promptly execute the remediation action to resolve the issue and notify the respective team about the failure and remediation action taken against those failures. The RPA has various components like Control tower, Bot creator, Bot Runner, Database, RPA services, Database services, Servers, Virtual Machines, computer network, etc. and all these components have to be monitored continuously to ensure that the bots are running smoothly in the deployed RPA environments. The disclosed technology comprises various aspects such as monitoring which comprises health dashboard for RPA components, automated anomaly detection, and alerts and notification; self-healing aspects such as remedial plans (also referred as remediation action plans), automated execution of remedial plans and script repository; and analytics aspects comprising bot performance dashboard. Through the disclosed technology, the administrator/user may perform bot registry and onboarding, access management and RPA component configuration.

Disclosed are a system, a method and/or non-transitory computer readable storage medium for automated detection and automated remediation of anomalies in a Robotic Process Automation (RPA) environment.

The invention is set out by the subject-matter of the independent claims. Advantageous embodiments are set out by the subject-matter of the dependent claims.

### BRIEF DESCRIPTION OF THE FIGURES

Example embodiments are illustrated by way of example and not limitation in the figures of the accompanying drawings, in which like references indicate similar elements and in which:
**Figure** 1 is a diagrammatic representation of a data processing system capable of processing a set of instructions to perform any one or more of the methodologies herein, according to one or more embodiments.
**Figure** 2 is an architecture diagram of system for automated detection and automated remediation of anomalies in a Robotic Process Automation (RPA) environment, according to one or more embodiments.
**Figure 3** is a process flow diagram illustrating sequence of steps executed by the system for automated detection and automated remediation of anomalies in a Robotic Process Automation (RPA) environment, according to one or more embodiments.
**Figure 3A** illustrates an exemplary metric message, according to one or more embodiments.
**Figure 3B** illustrates an exemplary historic unstructured log data, according to one or more embodiments.
**Figure 3C** illustrates exemplary error patterns, regular expressions to identify error patterns and the respective log files, according to one or more embodiments.
**Figure 3D** illustrates a user interface where the system has identified error patterns based on the regular expressions, according to one or more embodiments.
**Figure 3E** illustrates a user interface to define error types and variable patterns, according to one or more embodiments.
**Figure 3F** is a continued screenshot of user interface illustrated in **Figure 3E****,** for mapping remediation action for the defined error type, according to one or more embodiments.
**Figure 4A** is a screenshot illustrating the metric configuration interface, according to one or more embodiments.
**Figure 4B** is a screenshot illustrating monitoring plan configuration interface, according to one or more embodiments.
**Figure 4C** is a screenshot illustrating remediation plan configuration interface, according to one or more embodiments.
**Figure 4D** is a screenshot illustrating self-heal configuration interface, according to one or more embodiments.
**Figure 4E** is a screenshot illustrating threshold monitoring configuration interface, according to one or more embodiments.
**Figure 4F** is a screenshot illustrating an interface to provide the complete Resource Model view of a typical RPA platform instance, according to one or more embodiments.

Other features of the present embodiments will be apparent from the accompanying drawings and from the detailed description that follows.

### DETAILED DESCRIPTION

The objective of invention in the present disclosure is to overcome the technical problem mentioned in the background section through a system and/or method for automated detection and automated remediation of anomalies in a Robotic Process Automation (RPA) environment which ensures end-to-end monitoring of the RPA platform and its components along with their dependencies and automatically restore any unhealthy component to a healthy state in the shortest possible time in order to minimize operational disruptions.

If one considers the typical day in the life of support personnel managing RPA operations - IT administrator may track alerts raised by monitoring tools which monitor various IT components of an RPA environment such as servers, VMs, computer networks etc. Database administrator may monitor performance and availability of RPA databases. RPA administrator may monitor the RPA operations which includes bots, queues, scheduling etc. In large enterprises, the walls between them often lead them to lose sight of big picture. The issues in the infrastructure may be, but not limited to server down, high memory consumption, low disk space, VMs not connecting etc. Some of the issues with databases may be DB service down, high Program Global Area (PGA) memory usage, high file system usage, blocked user transactions etc. Some issues with RPA bots may be Control Tower service down, scheduler issue, bot deployment failure, bot SLA breach etc. Typical challenges faced in such environment are - low visibility, need of experts in some situations and/or higher mean-time-to-recovery (MTTR) rates. The technology described in the present disclosure overcomes the above-mentioned problems with clear sighted intelligent self-healing operation of all components in the RPA environment.

Some of the key aspects of the disclosed system are monitoring RPA components, self-healing in case of anomaly and generation of analytics which provides the ability to manage any RPA operation by having a complete end-to-end view of RPA components and dependencies right from low level infrastructure components such as servers, VMs, etc. to RPA components such as Control Tower, bots, services, and databases. The disclosed technology will perform root cause analysis on the operating metric/logs and take prompt remedial actions to bring unhealthy RPA components into a healthy state or proactively notify SMEs for prompt remedial fixes through manual means. The disclosed technology is capable of tracking baseline environment changes and then periodically assess them from any deviations which could lead to disruptions in operations in the RPA environment.

In one or more embodiments, a method, system and/or computer readable storage medium for automated detection and automated remediation of anomalies in a Robotic Process Automation (RPA) environment is disclosed. One or more RPA platforms and computing devices communicatively coupled to the one or more RPA platforms together forms an RPA environment. The method comprising, discovering one or more resources in an RPA platform. The discovered one or more resources on the RPA platform may be monitored and the steps comprising, determining values of one or more observation metrics from the one or more resources in the RPA platform; and detecting at least one anomaly by validating the values of the one or more observation metrics. The determination of the values of the one or more observation metrics comprises, querying the one or more observation metrics of the one or more resources and at least one script associated with each of the one or more metrics; executing the at least one script to fetch the values of the one or more observation metrics from the one or more resources; and generating a metric message comprising the values for each of the one or more observation metrics. The detection of the at least one anomaly, comprising, parsing the metric message to obtain values of the one or more observation metrics; comparing the values of the one or more observation metrics against a threshold value for each of the one or more observation metrics; and determining the values of the one or more observation metrics as anomaly if the values of the one or more observation metrics breach the threshold value.

The threshold value may either be a deterministic threshold value or non-deterministic threshold value, wherein the deterministic threshold value may be defined by a user and non-deterministic threshold may be determined by trained machine learning models. The detected at least one anomaly is remediated by identifying at least one automated remediation action comprising sequence of instructions and executing the identified at least one automated remediation action causing the remediation of the detected at least one anomaly. The steps of training machine learning models may comprise, receiving metrics data from metrics data store and historic unstructured log data from log data store; converting the metrics data and the historic unstructured log data to a structured format data; extracting error patterns from the structured format data; and providing the extracted error patterns as input to the machine learning models to train the machine learning models.

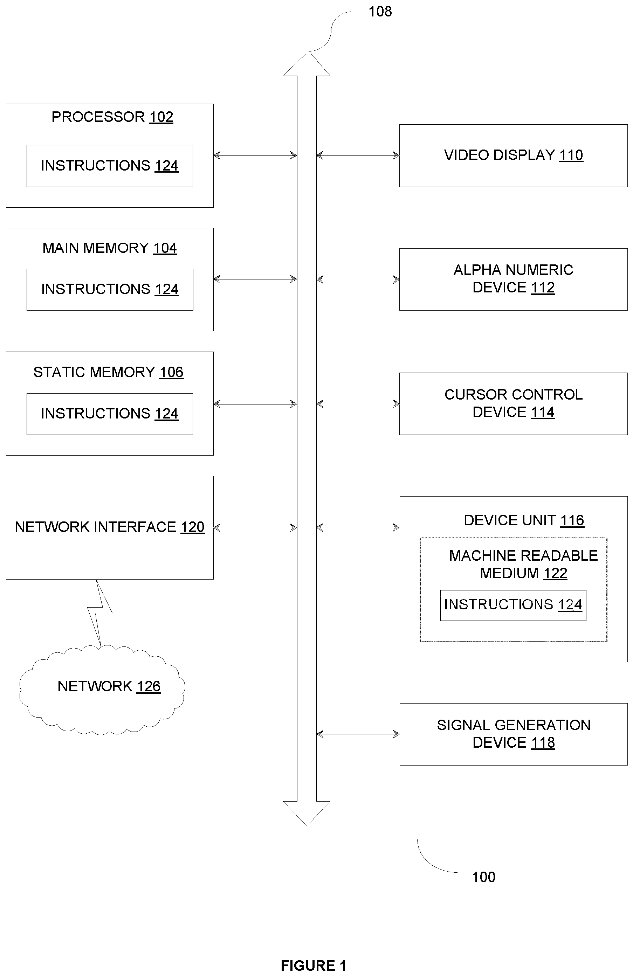

**Figure 1** is a diagrammatic representation of a machine and/or data processing device capable of processing a set of instructions to perform any one or more of the methodologies herein, according to one embodiment. The machine and/or the data processing device in the example form, comprises a computer system **100** within which a set of instructions, for causing the machine to perform any one or more of the methodologies discussed herein, may be executed. In various embodiments, the machine operates as a standalone device and/or may be connected (e.g., networked) to other machines.

A machine may be a personal computer (PC), laptop or an embedded system and/or any machine capable of executing a set of instructions (sequential or otherwise) that specify actions to be taken by that machine. Further, while only a single machine is illustrated, the term "machine" shall also be taken to include any collection of machines that individually and/or jointly execute a set (or multiple sets) of instructions to perform any one and/or more of the methodologies discussed herein.

The example computer system **100** includes a processor **102** (e.g., a central processing unit (CPU) a graphics processing unit (GPU) and/or both), a main memory **104** and a static memory **106,** which communicate with each other via a bus **108.** The computer system **100** may further include a video display unit **110** (e.g., a liquid crystal displays (LCD), Light Emitting Diode display (LED) and/or a cathode ray tube (CRT)). The computer system **100** also includes an alphanumeric input device **112** (e.g., a keyboard), a cursor control device **114** (e.g., a mouse), a disk drive unit **116,** a signal generation device **118** (e.g., a speaker), and a network interface **120.**

The disk drive unit **116** includes a machine-readable medium **122** on which is stored one or more sets of instructions **124** (e.g., software) embodying any one or more of the methodologies and/or functions described herein. The instructions **124** may also reside, completely and/or at least partially, within the main memory **104,** within the static memory **106** and/or within the processor **102** during execution thereof by the computer system **100,** the main memory **104 and** the processor **102** also constituting machine-readable media.

The instructions **124** may further be transmitted and/or received over a network **126** via the network interface **120.** While the machine-readable medium **122** is shown in an example embodiment to be a single medium, the term "machine-readable medium" should be taken to include a single medium and/or multiple media (e.g., a centralized and/or distributed database, and/or associated caches and servers) that store the one or more sets of instructions. The term "machine-readable medium" shall also be taken to include any medium that is configured for storing, encoding and/or carrying a set of instructions for execution by the machine and that cause the machine to perform any one or more of the methodologies of the various embodiments. The term "machine-readable medium" shall accordingly be taken to include, but not be limited to, solid-state memories, optical media, and magnetic media.

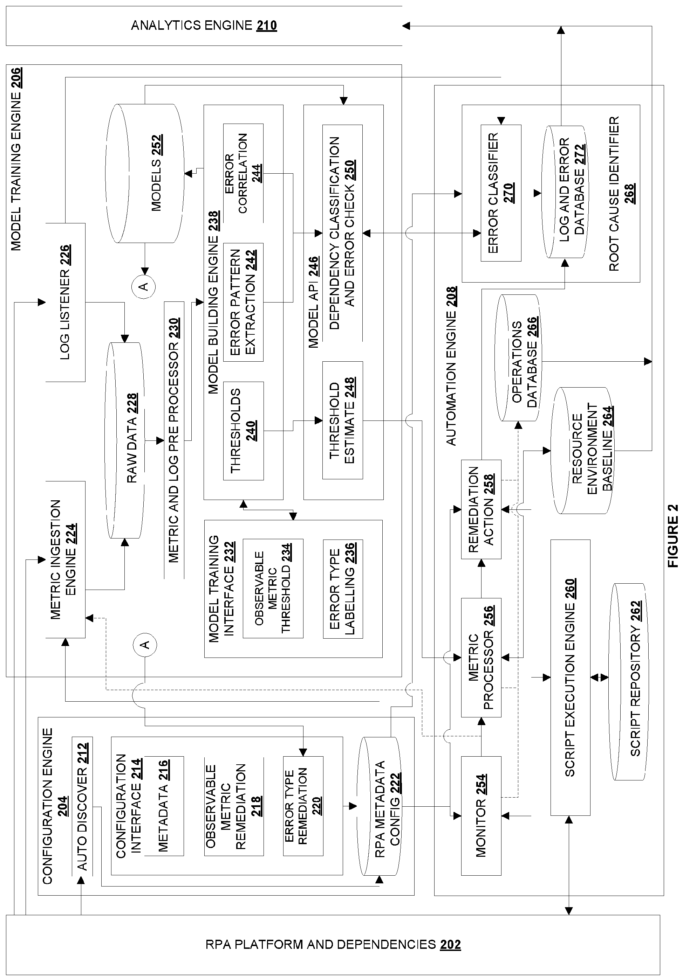

**Figure 2** is a system for automated detection and automated remediation of anomalies in a Robotic Process Automation (RPA) environment, according to one or more embodiments. In one or more embodiments. the system may comprise one or more components such as, but not limited to RPA platform **202,** a configuration engine **204,** a model training engine **206,** an automation engine **208** and an analytics engine **210.** The configuration engine **204** may comprise one or more components such as, but not limited to, an auto discover engine **212,** a configuration interface **214** and RPA metadata configuration database **222.** The configuration interface **214** may comprise one or more components such as, but not limited to, metadata **216,** observable metric remediation **218** and error type remediation **220.**

In one or more embodiments, the training engine **206** may comprise one or more components such as, but not limited to, metric ingestion engine **224,** log listener **226,** raw data storage device **228,** metric and log pre-processor **230,** model training interface **232,** model building engine **238,** model API **246** and models storage device **252.** The model training interface **232** may comprise observable metric threshold configuration module **234** and error type labelling module **236.** The model building engine **238** may comprise thresholds module **240,** error pattern extraction engine **242,** error correlation engine **244.** The model API **246** may comprise threshold estimate API **248** and dependency classification and error check API **250.**

In one or more embodiments, the automation engine **208** may comprise one or more components such as, but not limited to, monitor module **254,** a metric processor **256,** a remediation action module **258,** script execution engine **260,** a script repository **262,** resource environment baseline storage device **264,** an operations database **266** and root cause identifier **268.** The root cause identifier **268** may comprise components such as, but not limited to error classifier **270** and log and error database **272.** The working of each of the mentioned components and the communication between each of them is described in detail in subsequent paragraphs of the present disclosure.

In one or more embodiments, configuration engine **204** may be configured to initiate the process of automated detection and automated remediation of anomalies by onboarding RPA components and all its dependent components on the RPA platform **202,** which are to be managed by the system. An exemplary RPA platform may be 'Automation Anywhere' or any such platform which provides RPA functionalities/services. Exemplary RPA components may be a Control Tower, a bot runner, bots etc. Exemplary dependent components may be Virtual machines (VMs), servers, infrastructure resources such as memory/storage devices and middleware such as web servers, database etc. Both the RPA component and the dependent components may together be termed as RPA resources. The process executed by configuration engine **204** may either be automated or manually performed by a user through configuration interface **214.** As a part of onboarding of RPA components and all the dependent components, the auto discover engine **212** may be configured to execute an auto discovery process, which may load the details of RPA components and the dependent components by connecting with RPA platform **202** and querying the RPA components through RPA provided APIs or database to discover the various RPA components onboarded/installed in the RPA environment.

In one or more embodiments, broadly, the onboarding process may comprise steps such as auto discovery process and activate process. As a part of auto discovery process, attributes of all the RPA components in the RPA platform may be extracted. The access of all the RPA component to the RPA platform may be verified by way of web API or direct call to database. Before initiating the auto-discovery, the system may request user to provide access credentials (username and password) in case of API or the database credentials (username and password) in case of call to database. The system may then use these credentials to check access permission before initiating auto discovery process. Further, access to other RPA components requires RPA admin to grant permission to the credentials which may be used by the system to query RPA components for verification checks. One or more monitoring and remediation action plans may be set up by the user as a part of initial configuration by the user. The 'activate' process may comprise steps such as configuring credentials for script execution and other parameters, activating the monitoring task and activating remediation plans for the RPA components, and review the RPA resources which are up and functioning.

The auto discovery process may extract the attributes (also referred as metadata configurations or metadata 216) for each of the discovered RPA components such as, but not limited to bot name, bot location, server IP address, database IP address, connection string of database, Control Tower IP address, bot runner, VM component details etc. which may be used for monitoring and remedial actions by the system in the disclosed technology. The extracted attributes may be stored in the RPA metadata configuration database 222. The auto discover engine 212 may be configured to execute auto discovery process continuously or periodically which will ensure that stored RPA metadata configuration are in sync with the environment of the RPA platform that is being managed. The configuration interface 214 may be configured to display attributes of all the RPA components and dependent components to the user. The user may add, modify, or delete any RPA components and/or configurations related to RPA components and the dependent components. Each RPA component and the dependent components may be identified and termed as 'resources'. Each of the resources may have relationship (communicatively coupled) with other resources and which may be modelled using the configuration interface 214. Each of the resources may be monitored/observed on various parameters which are termed as 'observables' (also termed as 'observable metrics' or 'observation metrics').

In one or more embodiments, the observables may be monitored for anomalies based on Anomaly Detection techniques, wherein one of the techniques is using thresholds (or thresholding models or threshold models). In the thresholding models, threshold values for the metrics are used by the system to identify anomalies in the behavior of the metrics being monitored. These threshold values may either be static (rule-based, also referred as 'deterministic') i.e. same value in any operating condition with an assumption that no underlying environment variability will have an impact on the resource behavior; or dynamic (or adaptive, also referred as 'non-deterministic') where threshold values are computed dynamically for parts of the larger dataset which have dependency on underlying dependent variables such as time of the day, transaction volume, CPU utilization, etc. which may impact the behavior of the resources. For example, if CPU utilization value is greater than 75%, it may be considered as breach if the threshold is set as 75%, which is a rule-based threshold. In case of dynamic threshold, the value of the metric may be derived from other operating parameters in the environment. For example, say during a certain period of the last 3 months historical data, the system has learned that CPU utilization on Thursdays at 6 PM is usually 40%, whereas CPU utilization on Thursdays at 10 AM is 70%. These CPU utilization values are learned by a machine learning system based on parameters which in this case being 'day of the week' and 'time'. So, the value of CPU utilization may change in the future based on operations and system will automatically learn about this change in CPU utilization by understanding the day of the week/time metric of the past historical data.

In one or more embodiments, the configuration engine 204, through configuration interface 214 may allow user to configure the remediation action plans, after the RPA components and the dependent components are onboarded. A Remediation Action Plan may be a single action step or series of action steps which the system will execute to resolve a particular anomaly. An action may be a script (set of instructions) or a workflow which may be fetched from a centralized script repository **262** and the scripts are linked with the appropriate Remediation Action Plan. Once the remediation action plans are defined, user can map them to either observable metrics and store as observable metric remediation **218;** or map them to error type and store as error type remediation **220.** Both the variants of anomalies, i.e., any anomaly detected due to a threshold breach in the observable metrics and anomaly detected due to errors identified in log data can be linked with one or more Remediation Action Plan through the configuration interface **214. Table 1** illustrates an exemplary mapping of observable metrics that needs to be monitored by the system and the respective Remediation Action Plan to be executed automatically if anomaly is detected while monitoring the RPA components by the system.

**Table 1: Exemplary mapping of monitoring plan related to observable metrics and the respective Remediation Action Plan**

| **Monitoring Plan** | **Remediation Plan** |
|---|---|
| Check Orchestrator Status | Server Up Status Check |
| Check Robot Status | Server Up Status Check |
| Check Service Status | Start Service |
| Check Job Status | Start Job |
| Check Job Execution Time | Manual Remediation |
| Check DB Server Status | Server Up Status Check |
| Check Service Status | Start Service |

In one or more embodiments, the model training engine **206** may be configured to ingest data such as metrics data and historic unstructured log data and train the machine learning models. The metric ingestion engine **224** may be configured to receive historical metrics data from metrics data store associated with the RPA platform **202** through enterprise monitoring systems. The metric ingestion engine **224** may also be configured to receive attributes that are stored in the RPA metadata configuration database **222,** and observable metrics data from automation engine **208** (described in subsequent paragraphs). The log listener **226** may be configured to receive historic unstructured log data such as, but not limited to event logs, application logs etc. from the log data store associated with RPA platform **202.** The data received at the metric ingestion engine **224** and log listener **226** may be stored in the raw data store **228** which may be converted into a structured format data by the metric and log pre-processor **230.** The metric and log pre-processor **230** may be configured to receive raw data from the raw data store **228** and convert it to structured format data by applying transformation/aggregate functions to prepare data for model training. As the raw data may be in the form of structured or unstructured format, the metric and log pre-processor **230** may extract features/values and convert into a format which can be used for model training. Transformation/Aggregate functions are part of the feature extraction and may be performed using data wrangling techniques which is a process of transforming and mapping data from one raw form to another format. After the conversion of raw data into a structured format data, the data points in the structured format data which are in the form of metrics and error patterns may be used to train or create models by the model building engine **238.**

In one or more embodiments, the model building engine **238** may be configured to receive data in the structured format from the metric and log pre-processor **230.** The thresholds **240** may be either static thresholds or adaptive thresholds. In one or more embodiments, the model building engine **238** may be configured to receive inputs from user/SMEs through model training interface **232** which allows user/SMEs to define static thresholds and also configure/tune the adaptive threshold as well as label error types. The observable metric threshold configuration module **234** may receive inputs from user which allows the user to define/setup a static threshold, and/or select model algorithms in case of dynamic threshold and define model algorithms to be used for the observables being monitored.

For adaptive thresholds, algorithms such as Linear Regression, Exponential Weighted Moving Average etc. may be used to generate the adaptive threshold models for each resource/observable metric to be monitored by the system. Linear Regression is a linear approach for modelling the relationship between scalar response and one or more explanatory variables (also known as dependent and independent variables). For example, a scalar response variable may be 'bot completion time' and explanatory variable may be - 'number of records processed' and 'day of the week'. Now, using multiple Linear Regression, since there are two explanatory variables, the relationships are modelled using linear predictor functions whose unknown model parameter (estimated completion time) is predicted by the model building engine **238.** Weighted Moving Average comprises calculation to analyze data points by creating a series of averages of different subsets of the full data set. Each RPA component and its respective observables (or observable metrics) such as, but not limited to bot queue length, bot completion time etc. may have a threshold value/range computed using the above-mentioned technique. A model can be trained for a particular resource observable metric on different variables such as time of day, number of records to be processed by the bot etc. to predict the threshold value which could be in terms of bot queue length, bot processing time etc. Also, the model building engine **238** may receive user input from model training interface **232** through observable metric threshold configuration module **234** to tune the dynamic threshold parameters.

On the log pattern analysis, transactions from log data of the RPA components being monitored may be passed through the error pattern extraction engine **242** to perform log analytics which can use algorithms such as Longest Common Subsequent algorithm to automatically generate error patterns. These error patterns can then be reviewed by an SME to label as an error type using error type labelling module **236** through the model training interface **232,** which can be persisted and used by the system for notifying the root cause of the issue to the users or take corrective actions without human intervention. Further, the error correlation engine **244** may perform correlation-based training on error transactions to have a better understanding of any other related errors which may be occurring in other components (those without direct/immediate dependencies) that may be the root cause of the issue or failure of any RPA resource.

The error type labeling module **236** may receive inputs from user which allows the user to mark/identify patterns identified by the error pattern extraction engine **242** as errors. This will help the system to learn from this labeling and use the captured knowledge to be leveraged for other RPA components where similar errors may occur. Once the models are built and trained, they are published and exposed as API which can be used by the automation engine **208** at runtime. Using the resource observable metric threshold estimate API **248,** the model can predict the estimated threshold value for a particular resource/observable metric based on the input parameters passed. Through the dependency classification and error check API **250,** the model may verify if a log transaction extracted from a log file for a specific RPA resource is a labeled error type and will also return details of potential root cause found in other resources which have been found to be correlated very close in the past. The generated and trained models may be stored in the models storage device **252.** As, the models storage device **252** may be communicatively coupled to the configuration interface **214,** it may allow user to associate an error type with remediation action at the configuration interface **214.** After the configurations of all RPA components and its dependencies, and creation of models based on historical data available from the RPA systems, the automation engine **208** may monitor and detect anomalies.

In one or more embodiments, even if the models have not been created due to non-availability of historical data, the automation engine **208** may still perform the monitoring, anomaly detection and remediation based on static thresholds and root cause analysis may be executed using regex (regular expression) rules for error pattern detection which may be either configured by the user or automatically detected by the system.

In one or more embodiments, the automation engine **208** may be configured to monitor the RPA components and all the dependent components using the monitor module **254,** detect anomaly using the metric processor **256,** and remediate the detected anomaly using the remediation action module **258.** The monitoring may either be a scheduled monitoring or a triggered monitoring, wherein the monitoring may monitor/scan resources based on observable metrics such as, but not limited to bot runtime, bot queue length, virtual machine CPU utilization, Control Tower service status etc. In case of triggered monitoring, the monitoring may be triggered by receiving inputs from a user through an upstream system such as custom apps/software or IT service management applications/software. In case of scheduled monitoring, the monitoring engine **208** may extract multiple data points from the resources being monitored from the RPA metadata configuration database **222** which comprises extracted attributes as a part of auto discovery periodically with intervals as defined by the user, for example, collecting list of software installed on the RPA platform/environment, version information of installed software, date of install/update on a server/VM resource etc. to perform verification of any changes in resource environment. Some of the common reasons for failure of bots in an RPA environment is change in the installed application, changes in the configuration, as any change in such aspects cause the bot script logic to fail. Hence updates on such environment changes will help operations team to prevent bot failures more proactively.

In both the scenarios of triggered monitoring and scheduled monitoring, the monitor module **254** may fetch the observable metrics configured for each resource from the RPA metadata configuration database **222.** Since the health check or monitoring of RPA components are driven through configurations, the user/administrator may enable or disable the health check for specific RPA components centrally rather than enabling or disabling at individual script levels. To execute a specific observation health check based on which RPA platform needs to be monitored, the monitor module **254** will query the RPA metadata configuration database **222** to identify the list of RPA components that needs to be monitored and the associated observable metrics, and then identify the script which needs to be executed. The Script ID of the identified script may then be passed to the script execution engine **260** along with the attributes, for example server name/IP address, user credentials in case of server to be monitored. It is to be observed that mapping of Script ID may be performed by the user through the configuration interface **214** as a part of initial setup/configuration as described in previous paragraphs of the present disclosure. The script execution engine **260** may fetch the script from the script repository **262** using the Script ID and execute the scripts centrally, by sending one or more instructions to RPA platform **202** to obtain values for the observable metrics (for example, CPU utilization, response time etc.). Once the script is executed, the script execution response parameters are returned to the script execution engine **260** and then to the monitor module **254** to prepare the metric message. The metric message may be in a text format comprising observable metrics and values for each of the observable metrics. Each health check executed by the monitor module **254** may generate a metric message containing the details of the observable metrics and the details of resources for which the observations have been made. The metric message may then be communicated to the metric processor **256** either synchronously or asynchronously. In a synchronous communication, the monitor module **254** may send metric message to the metric processor **256** and then wait for the response from metric processor **256** before proceeding to send the next metric message. In asynchronous communication, the monitor module **254** may keep sending generated metric message to metric processor **256** and not wait for success/error response before sending the subsequent error metric message. In case of asynchronous communication, the monitor module **254** may reconcile the status of posted metric message offline through separate process. It is to be observed that the metrics that are obtained as response from the RPA platform **202** through script execution engine **260** may be communicated to metric ingestion engine **224** for training the models.

In one or more embodiments, the metric processor **256** may detect anomalies in the values obtained for the observable metrics such as bot status, bot queue length etc. and may also detect anomalies in category/collection i.e., a data structure containing a list of data items such as applications installed in the RPA platform **202** compared to the baseline software list stored in the RPA resource environment baseline storage device **264.**

In one or more embodiments, the metric processor **256** may parse the metric message received from the monitor module **254** and extract the configuration data in terms of metric values in the message from the metric message. The metric processor **256** may execute anomaly detection on the metric values. Anomaly may be detected by validating the metric values against a threshold value. The threshold value may either be a static threshold value/range as configured through the Threshold rule configuration UI (i.e., observable metric threshold configuration module **234)** or may be retrieved dynamically by invoking the "Resource Observable Metric Threshold Estimate" API (i.e., threshold estimate API **248)** which uses the adaptive threshold model to predict a dynamic threshold value. In other embodiments, the static thresholds may also be exposed as APIs which are accessed by the metric processor **256.** If the validation determines that if there is a breach of threshold, then the captured observable metric may be marked as an anomaly and an event/alert may be raised to take further actions which could be sending out a notification to users and/or triggering an automated remediation process as configured. If there is no breach of threshold, no action may be taken and the metric processor **256** may assess the next observable metric in the queue. It is to be observed there may be either upper threshold or lower threshold or both upper and lower thresholds for some of the observable metrics. For some observable metrics, the values of observable metrics below a threshold value may also be considered as breach of threshold. In case of static threshold, the system may allow user to define both the upper threshold and the lower threshold for an observable metrics. In case of dynamic threshold, the system may be configured to automatically determine upper threshold and/or lower threshold based on the analysis of historic metrics data and historic log data to generate and train machine learning models as described in various embodiments of the present disclosure.

In one or more embodiments, the remediation action module **258** may be configured to execute Remediation Action Plan for the anomaly detected by the metric processor **256.** Based on the observation through the observable metrics for which an anomaly has been detected, the remediation action module **258** may determine appropriate Remediation Action Plan to be executed to resolve the anomaly. This will be triggered by an event when any anomaly is detected by the metric processor **256,** and an anomaly message containing details of the anomaly and the resource observations (i.e., the values obtained for the observable metrics from the RPA components and the dependent components) for which the anomaly is raised may be received by the remediation action module **258.** A Remediation Action Plan may comprise series of action steps which will be executed in sequence by the script execution engine **260** as configured. Each action is either linked with a script or a workflow in case of executing more complex orchestration logic. When the anomaly is detected by the metric processor **256,** the remediation action module **258** may identify the remediation action plan to be executed by sending one or more instructions to the script execution engine **260.** The Remediation Action Plan will start executing the action steps wherein each action steps contain details of the script/workflow to be executed.

The remediation action module **258** may send one or more instructions to the script execution engine **260** along with the script ID of the identified Remediation Action Plan, the observable metrics and the values, for example, component name, IP address and/or user credentials, so that script execution engine **260** execute the action steps centrally. The script execution engine **260** may fetch the script to be executed from the script repository **262** based on the script ID and then execute the actions steps which are part of fetched script which causes the script execution engine **260** to send one or more instructions to the RPA platform **202,** which causes the resolution of anomaly detected in the RPA platform. In an example embodiment, the resolution (also termed as remediation) may indicate change in state of operation of resources - either to bring back the resource to a healthy state i.e., a state which will not violate/breach the defined threshold, or to start/restart the resource if the resource is shut down/non-functional. After the completion of all the action steps present in the script, a status is updated for the anomaly detected in the operations database **266** and a notification may be sent to the impacted parties/user. If the execution of remediation action plan fails in any of the action steps then the error message may be logged, status may be updated in the operations database **266** and a notification may be sent to the impacted user for manual intervention to resolve the anomaly.

In one or more embodiments, as a part of Remediation Action Plan, a root cause analysis may be performed by root cause identifier **268** to ascertain if the resource being monitored has raised an error or if there are any correlated errors identified from another resource which could be a potential root cause of the anomaly. It is to be observed that the log data of resources are also being monitored and log data being streamed into the log listener **226** are parsed, transformed, and sent to error classifier **270** to identify an error type based on the patterns identified during the training phase. A pattern may be identified by querying the dependency classification and error check API **250** which will verify if a log transaction extracted from log file/log data for a specific resource is a labelled error type by querying the error pattern extraction engine **242.** The dependency classification and error check API **250** may also be configured to return details of potential root cause found in other dependent resources which may have been found to be highly correlated wherein such information is fetched by querying the error correlation engine **244.** If an error type is identified, such information may be stored in the log and error database **272** as an error type for that particular resource. The remediation action module **258** may query the operations database **272** to check for errors in the resources (RPA components and its dependencies) and can either take action and resolve the issue; or report the additional information gathered as part of the root cause analysis and share the user as an incident ticket or notify over email for taking corrective action manually. It is to be observed that the log data may comprise information of RPA component but not the details of dependent RPA components which may be the root cause for anomaly in some cases. In such cases, the root cause identifier **268** may receive the information of resources and all its dependencies from RPA metadata configuration database **222.**

In one or more embodiments, the analytics engine **210** may configured to receive data from resource environment baseline storage device **264,** operation database **266** and root cause identifier **268** and may be configured to generate insights from the received data and display to the user through a display of a computing device either in the textual format or graphical format. The analytics engine **210** may be configured to notify user through a notification displayed at the computing device associated with the user when an anomaly is detected such as bots stopped running, bot running for long, VM is down, database not connecting, etc. Also, the analytics engine **210** may be configured to display the status of the remediation action performed. A notification module of the analytics engine 210 may recognize the type of notification to be sent, load the relevant notification template from a list of template documents stored in a database and fill the template with specific data of the relevant resource/ observations/ actions for the user. Further the dashboard/reports module of the analytics engine **210** may be configured to provide insight on the various operational dimensions of managing an RPA platform to the user.

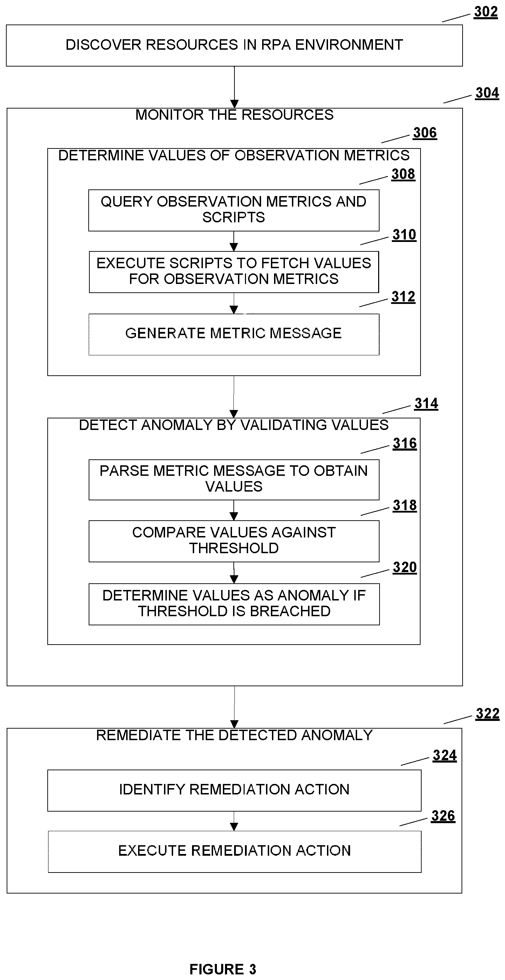

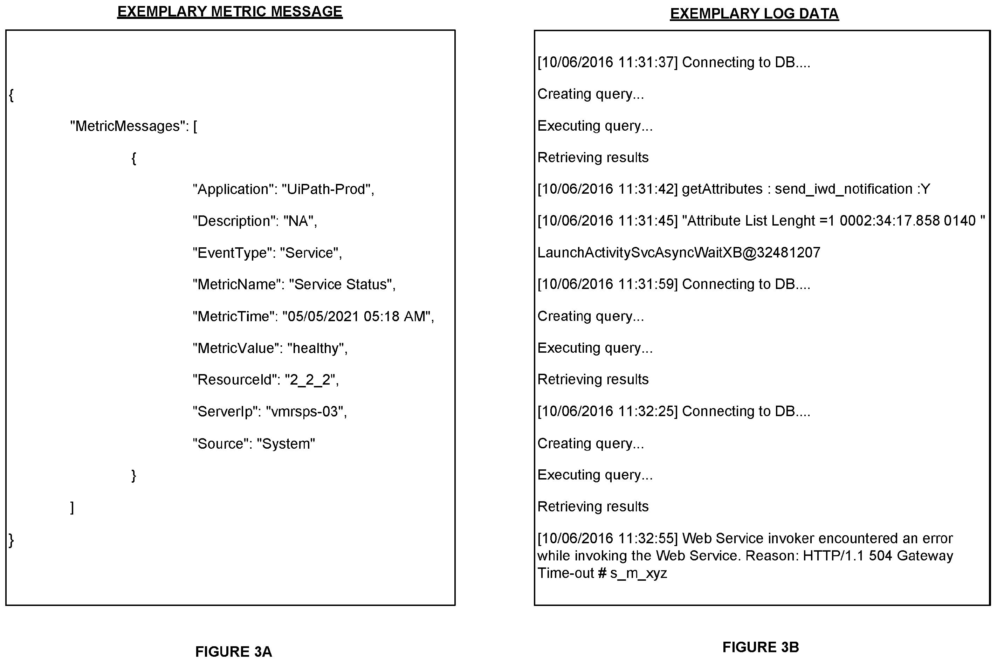

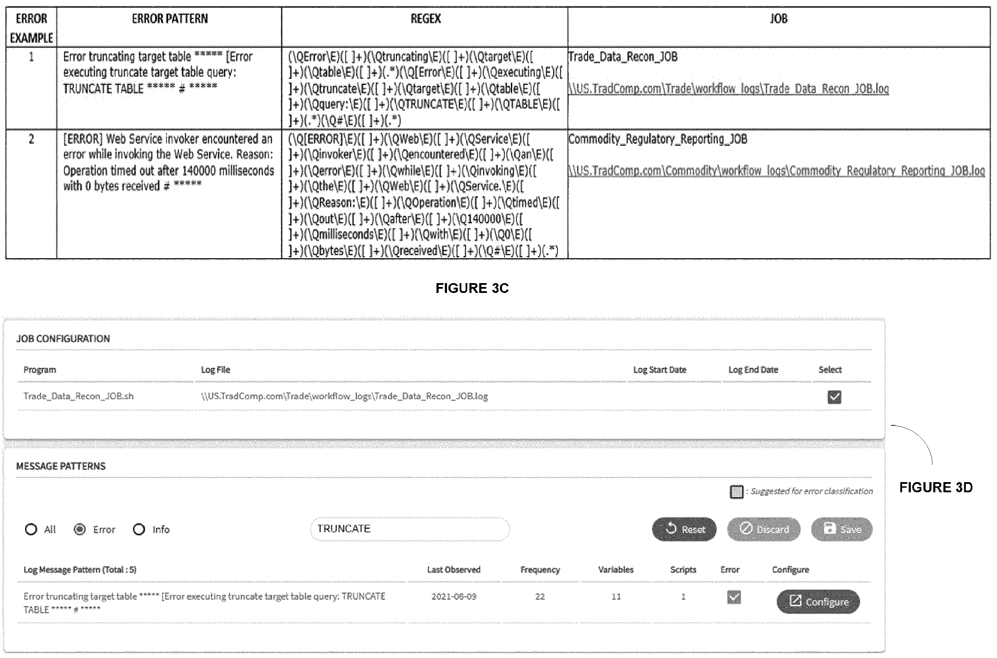

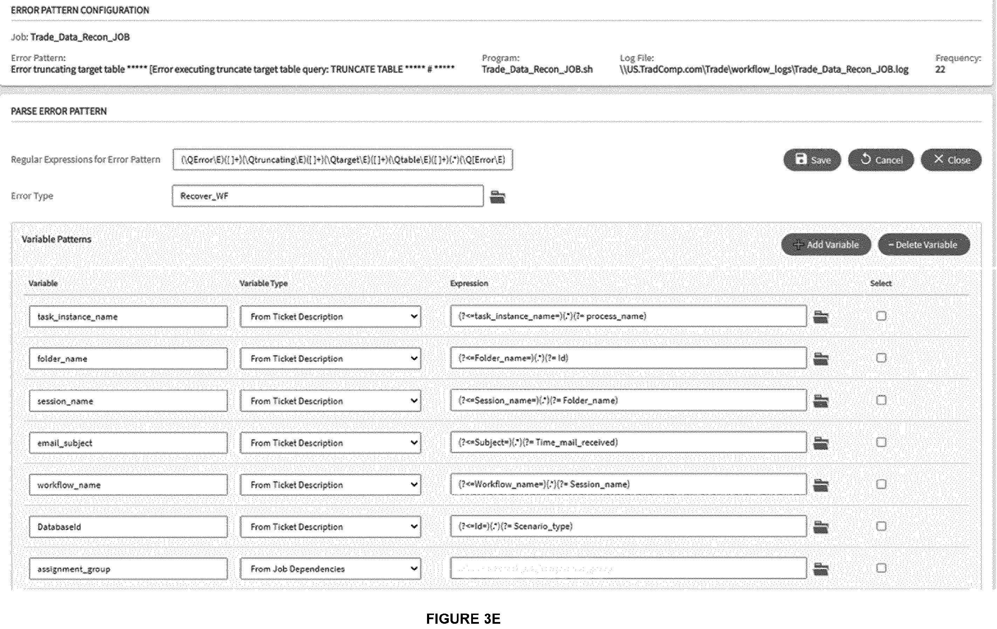

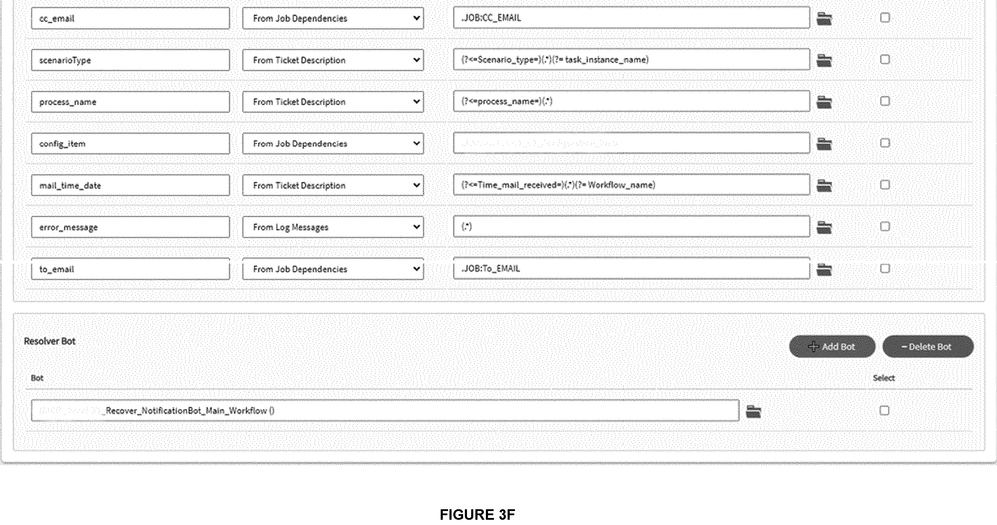

**Figure 3** is a process flow diagram illustrating sequence of steps executed by the system for automated detection and automated remediation of anomalies in a Robotic Process Automation (RPA) environment, according to the invention. The method comprises discovering one or more resources in an RPA platform, as in step **302.** The one or more resources are RPA components and its dependent components that are installed/associated with the RPA platform within the RPA environment. RPA components are a Control Tower, a bot runner, bots etc. Exemplary dependent components may be Virtual machines (VMs), servers, infrastructure resources such as memory/storage devices and middleware such as web servers, database etc. Both the RPA component and the dependent components may together be termed as RPA resources (or 'resources'). The discovery process automatically loads/extracts the attributes of RPA components and the dependent components by connecting with RPA platform **202** and querying the RPA components through RPA provided APIs or database and discover the various RPA components onboarded/installed in the RPA platform **202.** The attributes (also referred as metadata configurations or metadata) of each of the discovered RPA components and dependent components may be such as, but not limited to bot name, bot location, server IP address, database IP address, connection string of database, Control Tower IP address, bot runner VM component details etc. which may be used for monitoring and remedial actions. The extracted attributes are stored in the RPA metadata configuration database. The discovered one or more resources on the RPA platform may be monitored, on various parameters which are termed as observables (or observation metrics), as in step **302.** The monitoring of the one or more resources may be performed by determining values of one or more observation metrics from the one or more resources in the RPA platform as in step **306** and detecting at least one anomaly by validating the values of the one or more observation metrics, as in step **314.**

In one or more embodiments, the determination of the values of the one or more observation metrics may comprise - querying the one or more observation metrics of the one or more resources from the database (RPA metadata configuration database **222)** and at least one script associated with each of the one or more metrics from the script repository as in step **308.** The one or more observation metrics may be such as, but not limited to, CPU utilization, Orchestrator, Check Robot Status, Service Status, Job Execution Time DB Server Status, bot queue length, bot completion time etc. which may be defined by the user during the onboarding process as described in previous paragraphs. The auto discovery process may help in identifying what all RPA components are installed in the RPA platform and based on which the user may define the observable metrics that needs to be considered while monitoring the one or more resources. As a part of onboarding process the system through configuration interface may allow user to define and configure at least one script as a part of Remediation Action Plan that needs to be executed in case of detection of anomalies in the function of one or more resources based on the observation metrics for each of the one or more resources that needs to be monitored. A Remediation Action Plan may be a single action step or series of action steps which the system will execute to resolve a particular anomaly. An action may be a script (set of instructions) or a workflow which may be fetched from a centralized script repository and the scripts are linked with the appropriate Remediation Action Plan. Once the Remediation Action Plans are defined, user can either map them to either observable metrics and store as observable metric remediation; or map them to error type and store as error type remediation. An exemplary mapping is illustrated **in Table 1.** The onboarding process and other pre-requisites for the system to begin with the monitoring process is described in various embodiments of the present disclosure.

After querying the one or more observation metrics and determining which script needs to be executed (which is identified through script ID), the system may execute the at least one script to fetch the values of the one or more observation metrics from the one or more resources as in step **310.** In order to execute the script, the script ID may be communicated to the script execution engine which is configured to fetch the script from the script repository with the ID that was identified and execute the script. The script execution at the stage of monitoring will fetch the values for the observation metrics from the respective resources in the RPA platform. After obtaining values for the one or more observation metric a metric message may be generated comprising the values for each of the one or more observation metrics as in step **312.** An exemplary metric message is illustrated **in** **Figure 3A****.** The monitoring may either be a scheduled monitoring or a triggered monitoring. After the monitoring, the anomalies may be detected by the system.

In one or more embodiments, to detect the at least one anomaly as in step **314** the metric message may be parsed to obtain values of the one or more observation metrics as in step **316.** The obtained values of the one or more observation metrics may be compared against a threshold value for each of the one or more observation metrics as in step **318.** As described in various embodiments of the present disclosure the threshold value may either be deterministic threshold that are defined by a user or the non-deterministic threshold that are determined by trained machine learning models. Some of the observation metrics may be assessed against a deterministic threshold and some may be assessed against a non-deterministic threshold, based on the mapping performed as a part of initial configuration. The value of the at least one of the one or more observation metrics may be determined as anomaly if the value of the at least one of the one or more observation metrics breach the threshold value as in step **320.**

The detected at least one anomaly is remediated as in step **322** by identifying at least one automated remediation action (Remediation Action Plan) comprising sequence of instruction as in step **324.** The information about which Remediation Action Plan needs to be executed for specific anomaly may be configured by the user as a part of onboarding process as illustrated in **Table 1.** Based on the mapping the system may automatically select the Remediation Action Plan and an at least one automated remediation action in terms of scripts may be identified, and the script ID of the identified script may be communicated to the script execution engine. The script execution engine may the fetch the script from the script repository and execute the identified at least one automated remediation action causing the remediation of the detected at least one anomaly, as in step **326.** The identified script for the specific observation metric of the RPA component being monitored comprises instructions which causes the change in state of operation of the RPA component with respect to that specific observation metric. The script execution at the stage of remediation will resolve the anomaly. The execution of the identified at least one automated remediation action by the script execution engine, causes the script execution engine to send one or more instructions to that RPA component under monitoring to change the state of operation. For example, the remediation may indicate change in state of operation of resources - either to bring back the resource to a healthy state i.e., a state which will not violate/breach the defined threshold, or to start/restart the resource if the resource is shut down/non-functional.

In an example embodiment, consider an RPA component Virtual Machine (VM) is being monitored with 'memory consumption' as one of the observation metrics. Assume that the threshold is a deterministic threshold defined by the user as 75%. The user may also configure the Remediation Action Plan as which may reduce the 'memory consumption' by identifying other processes which can be paused or reduce the priority of execution or may be stopped too. These can be individual actions of same Remediation Action Plan. Alternatively, these can be individual Remediation Action Plan as configured by the user. With an assumption that the all the RPA components and dependent components have been onboarded as described in various embodiments of the present disclosure, the system may start monitoring the VM (The system may monitor all other resources that user has configured and for the example purpose VM may be considered) and continuously queries the RPA platform and/or underlying infrastructure (VM in the current example) on which the RPA component is running to fetch values for the 'memory consumption' metric by executing the script associated with the memory consumption. The response from the RPA platform may be received as metric message, which is then parsed to extract values of the 'memory consumption'. If the value is below threshold, the system may again monitor the 'memory consumption' metric of VM and it continues. It is to be noted that the system will be monitoring other observation metrics of same RPA component, if any, along with observation metrics of other RPA components simultaneously. If the value is more than the threshold, the mapped Remediation Action Plan may be executed to resolve the anomaly. It is to be noted that automated detection and automated remediation of anomaly is not just limited to VM, and VM is taken as example for easy understanding.

In another example embodiment, for the 'memory consumption' metric of the VM, a non-deterministic threshold may be determined by the system wherein the system learns it based on historical data. In such cases the threshold levels will be adaptive i.e., 75% may not be a threshold but may be below or above 75% which is determined by the threshold models that are built and trained, which causes the system to decide on the threshold levels dynamically. Based on the historical data, the system may learn that every Thursday around 1:00 PM to 2:00 PM, during the day, the memory utilization of VM is about 77%. So, the 77% utilization for this time is not to be considered as an anomaly and can be ignored without any specific action.

The steps of training machine learning models may comprise, receiving metrics data from metrics data store associated with the automation engine, attributes of the one or more resources from the RPA metadata configuration database and historic unstructured log data from log data store associated with the RPA platform. The attributes of the one or more resource may comprise information such as, but not limited to, bot name, bot location, server IP address, database IP address, connection string of database, Control Tower IP address, bot runner VM component details etc. An exemplary historic unstructured log data is illustrated in **Figure 3B****.** The metrics data and the historic unstructured log data may be converted to a structured format data by applying transformation/aggregate functions to prepare data for model training. One or more error patterns from the structured format data may be extracted using regex rules for error pattern detection. The regex rules may be either static regex rules that are pre-defined by the user or dynamic regex rules wherein the system is able to automatically extract error patterns, for example, using longest common sequence algorithm. The extracted error patterns may be provided as input to the to train the machine learning models. The steps of training machine learning models are described in detail in previous paragraphs in relation to model training engine **206** in **Figure 2****.** **Figure 3C** illustrates an exemplary error patterns, regular expressions to identify error patterns and the respective log files from where the error patters are extracted. **Figure 3D****,** **Figure 3E** and **Figure 3F****,** illustrates user interface provided by the system for the user to configure the error type (for Error Example 1 mentioned in **Figure 3C****)** and remedial action to be taken when such as an error is detected. As illustrated in **Figure 3D****,** the user will be able to see the error pattern that has been identified by the system in the log file and this interface may be used by the user to define an error type (For example, Recover_WF) as illustrated in **Figure 3E** which will be raised by the system whenever such pattern is detected in log files in the future. The interface also provides an option to specify the remedial action/self-healing action (by configuring a resolver bot) to be taken by the system to remediate the issue when the specific error type has been detected as illustrated in **Figure 3F****.** The variable patterns illustrated in **Figure 3E** and **Figure 3F** may be extracted from the log data or the metadata which helps in identifying which metadata is required (for example, what is the name of the RPA component, where in the RPA component running, to whom or which mail ID a notification needs to be sent after remediation etc.) to perform remediation action by the system. As mentioned in the **Figure 3F****, the** variable patterns are provided as input to the resolver bot ***Recover_NotificationBot_Main_Workflow ()*** which is further passed to script execution engine to perform remediation action as described in various embodiments of the present disclosure.

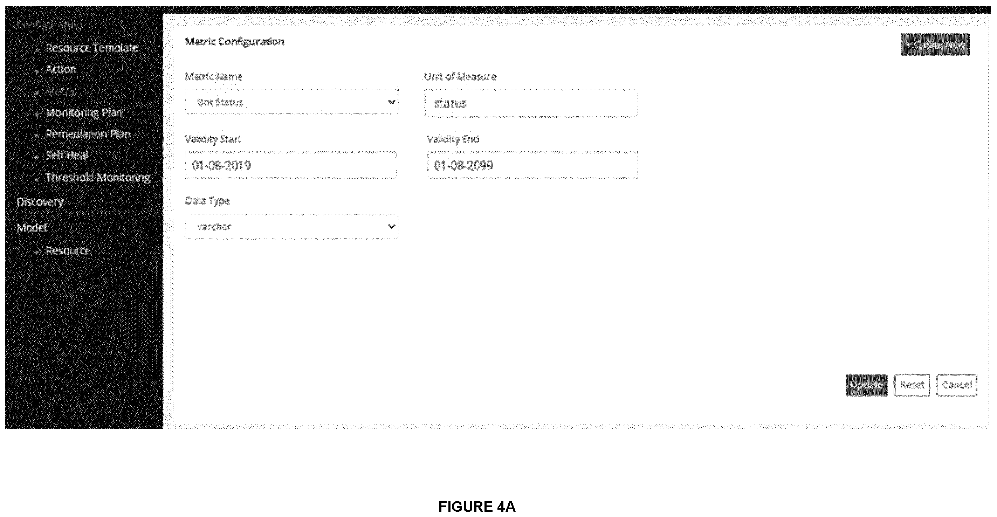

**Figure 4A** is a screenshot illustrating the metric configuration interface to configure monitoring of an RPA component i.e., a bot, according to one or more embodiments. The system through the configuration interface may allow user to define and configure an observation metric by providing a metric name for monitoring the bot installed on the RPA platform. As illustrated, the observation metric created in the illustration is 'Bot Status' along with defining the validity of the observation metric and the datatype of value it returns from the RPA platform during the monitoring process.

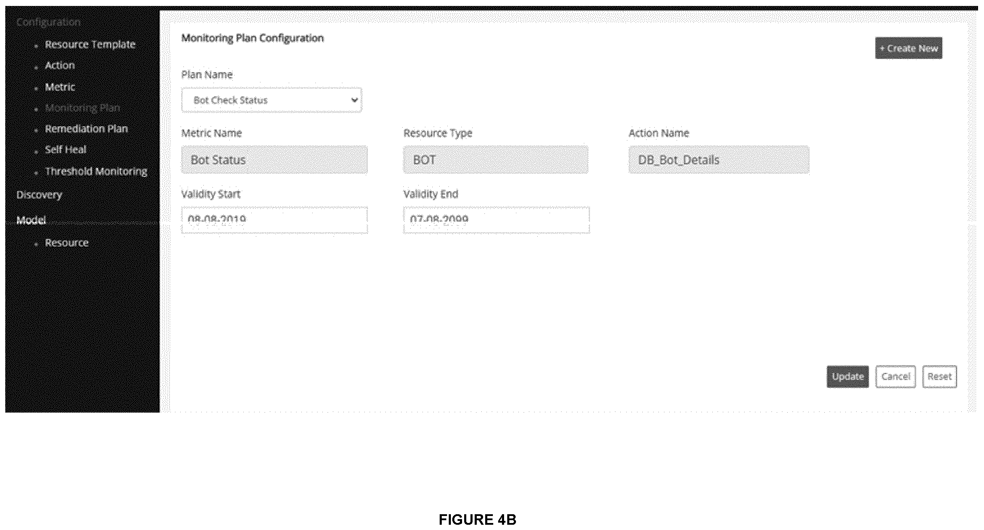

**Figure 4B** is a screenshot illustrating monitoring plan configuration interface for creating a monitoring plan 'Bot Check Status' for the observation metric 'Bot Status' through configuration interface, according to one or more embodiments. The interface for creating a monitoring plan allows user to define the resource type which is 'bot' and the action name 'DB_Bot_Details' which is configured to get the details of the 'bot'.

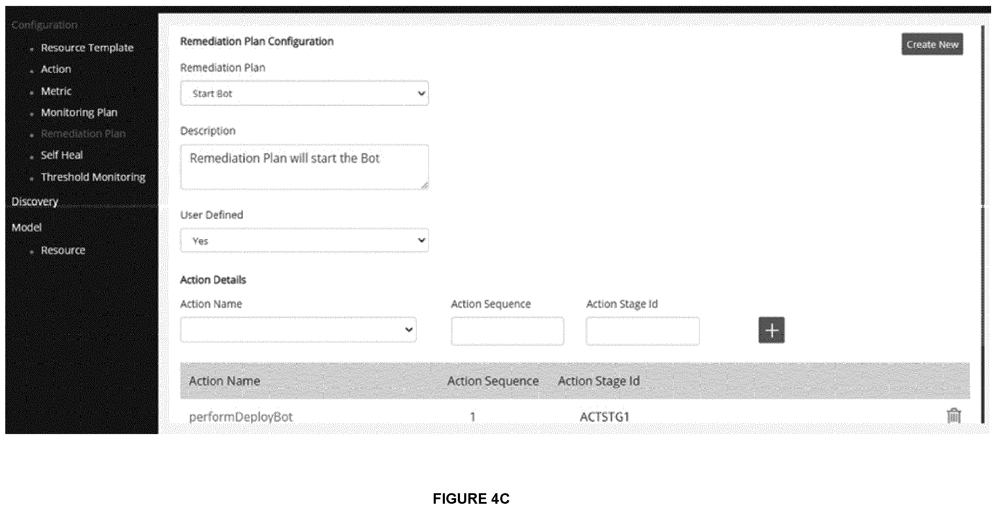

**Figure 4C** is a screenshot illustrating remediation plan configuration interface for creating a remediation plan 'Start Bot' for the RPA component 'Bot' in relation to metric 'Bot Status' under the monitoring plan 'Bot Check Status', according to one or more embodiments. As illustrated in the screenshot, the configuration interface may allow user to create plurality of remediation plans and map the scripts (Actions) that needs to be executed to achieve the remediation plan i.e., to automatically fix/resolve any issues or anomalies by the system.

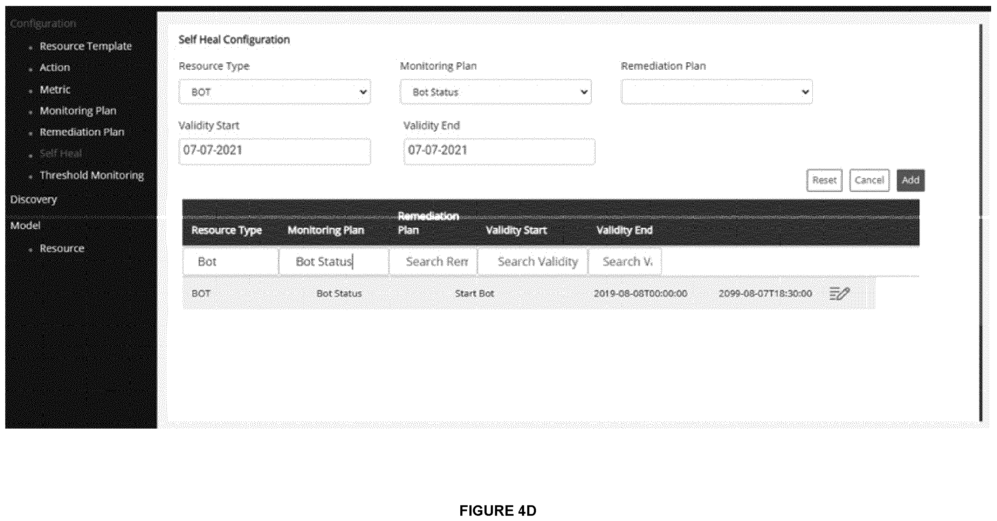

**Figure 4D** is a screenshot illustrating self-heal configuration interface for configuring a Remediation Action Plan (self-heal configuration), according to one or more embodiments. As illustrated in the screenshot, the resource is 'Bot', with the monitoring plan 'Bot Status' and the remediation plan being 'Start Bot'. The configuration interface may allow user to add/modify healing configuration by way of mapping of particular resource/metric and its respective remediation plan/actions to cause self-heal/resolution of anomaly.

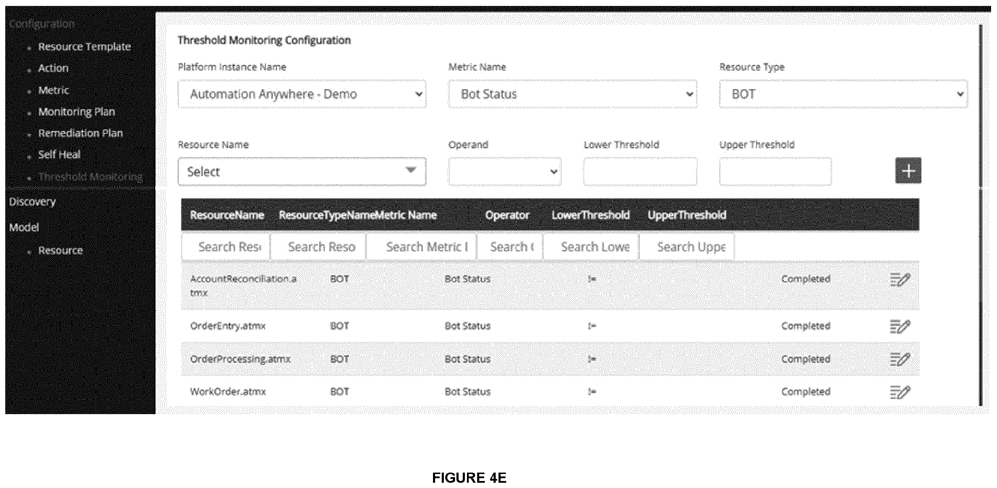

**Figure 4E** is a screenshot illustrating threshold monitoring configuration interface for configuring anomalies, according to one or more embodiments. As illustrated in the screenshot, the configuration interface may allow user to select the platform that is to be monitored, the observation metric and the RPA component (resource type) that needs to be monitored. The threshold monitoring configuration interface may allow user to configure the anomaly detection rule(s) for a particular resource. For a particular resource, an expression is constructed by specifying a defined metric followed by the operator expression to evaluate the operand value against the threshold value. The user may also construct an anomaly rule by chaining a series of expression such as ***Bot Status ! = Completed AND Completion Time*(*mins*)** > 5.0. The user may also define the upper threshold and lower threshold for a particular observation metric like 'Bot Status' as illustrated in the screenshot.

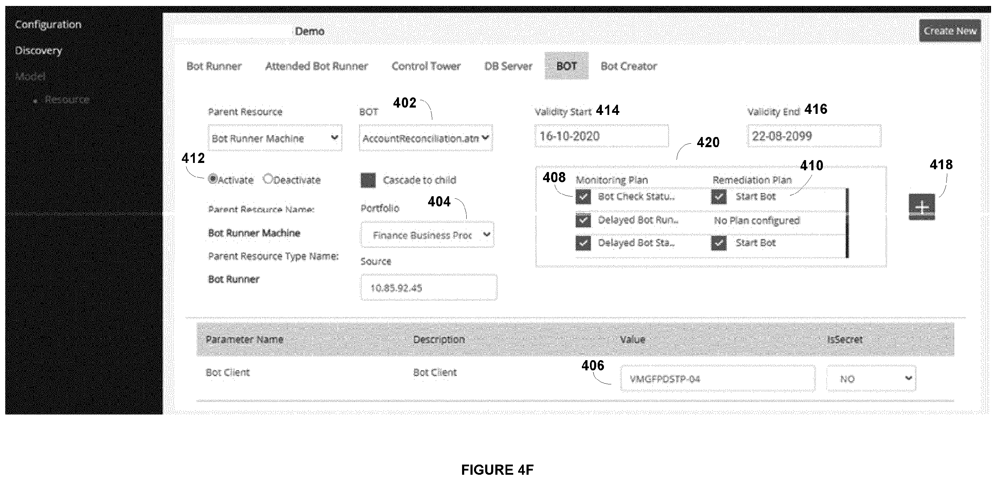

**Figure 4F** is a screenshot illustrating an interface to provide the complete Resource Model view of a typical RPA platform instance, according to one or more embodiments. The interface provides a detailed view of all the key RPA/ IT resources which constitutes an RPA platform such as Control Tower, Bots, Bot Runners, Servers, Database etc. along with their interdependencies. Each resource will have attributes based on the resource type to which resource belongs. In this interface, a user can observe the interdependencies defined. For example, a Bot -AccountReconcilation.atmx **(402)** is part of the Portfolio - Finance Business Process **(404)** and child of Bot Runner - VMGFPDSTP **(406).** For the Bot resource - AccountReconcilation.atmx, there are monitoring, and remediation plans defined, e.g. - For Monitoring Bot Check Status **(408),** a remediation plan by the name 'Start Bot' **(410)** has been configured. Resource attributes which may be referred in the monitoring or remediation plans are listed along with values e.g. Bot client. Further the interface comprises the option to activate/deactivate a resource monitoring either explicitly setting the appropriate property **(412)** or by defining a pre-defined validity period (Validity start date **414** and Validity end date **416).** Some of the functionalities through the illustrated interface are - (a)User can activate/de-activate any specific Resource **(412);** (b) User can add resource, click on plus icon **(418)** and a popup will be displayed with three options - (i) Add Parameter; (ii) Add Resource; and (iii) Add Observable - Remediation plan; (c) User can Select/Deselect **(420)** the Observable - Remediation plan; and/or (d) User can Update the exist parameter values.

In one or more embodiments, a non-transitory computer readable storage medium for automated detection and automated remediation of anomalies in a Robotic Process Automation (RPA) environment is disclosed. The non-transitory compute readable storage medium comprising machine executable code which when executed by at least one processor, causes the at least one processor to perform steps such as, discovering one or more resources in an RPA platform. The discovered one or more resources on the RPA platform may be monitored, wherein the monitoring comprises - determining values of one or more observation metrics from the one or more resources in the RPA platform; and detecting at least one anomaly by validating the values of the one or more observation metrics. The determination of the values of the one or more observation metrics comprises, querying the one or more observation metrics of the one or more resources and at least one script associated with each of the one or more metrics; executing the at least one script to fetch the values of the one or more observation metrics from the one or more resources; and generating a metric message comprising the values for each of the one or more observation metrics. The detection of the at least one anomaly, comprising, parsing the metric message to obtain values of the one or more observation metrics; comparing the values of the one or more observation metrics against a threshold value for each of the one or more observation metrics; and determining the values of the one or more observation metrics as anomaly if the values of the one or more observation metrics breach the threshold value.

The threshold value may either be a deterministic threshold value or non-deterministic threshold value, wherein the deterministic threshold value may be defined by a user and non-deterministic threshold may be determined by trained machine learning models. The detected at least one anomaly may be remediated by identifying at least one automated remediation action comprising sequence of instructions and executing the identified at least one automated remediation action causing the remediation of the detected at least one anomaly. The steps of training machine learning models may comprise, receiving metrics data from metrics data store and historic unstructured log data from log data store; converting the metrics data and the historic unstructured log data to a structured format data; extracting error patterns from the structured format data; and providing the extracted error patterns as input to the machine learning models to train the machine learning models.

The disclosed automated system, method and/or non-transitory computer readable storage medium for detection and remediation of anomalies in Robotic Process Automation environment addresses the problem in the present technology by moving from reactive to proactive approach of managing RPA platforms. The disclosed system will have a complete end-to-end visibility of the health status of all RPA components and their dependencies, proactively detect anomalies in any monitoring parameter or logs and then take corrective automation actions to bring back any non-working, unhealthy RPA component or its dependencies into a working, healthy state. The system continuously monitors RPA platforms and its dependent ecosystem, diagnoses the failure of RPA components and promptly execute the remediation action to resolve the issue and notify the respective team about the failure and action taken against those failure in the shortest possible time to minimize disruptions on operations in any Robotic Process Automation environment.

The specification and drawings in the present disclosure are to be regarded in an illustrative rather than a restrictive sense.

## Claims

1. A computer implemented method for automated detection and automated remediation of anomalies in a Robotic Process Automation, RPA, environment, comprising:
discovering (302), by a processor, one or more resources in an RPA platform, wherein the one or more resources comprise one or more RPA components and one or more dependent components corresponding to the RPA components associated with the RPA platform, wherein the one or more RPA components comprise one or more of: a control tower, a bot runner, and a bot, and wherein the discovering (302) comprises:
loading, by the processor, attributes of the one or more RPA components and the one or more dependent components by connecting to the RPA platform, and
querying, by the processor, the one or more RPA components through RPA provided Application Program Interfaces, APIs, or database for the discovering the one or more RPA components onboarded or installed in the RPA environment based on the attributes;
monitoring (304), by the processor, the discovered one or more resources in the RPA platform, comprising:
determining (306), by the processor, values of one or more observation metrics from the one or more resources in the RPA platform, and
detecting (314), by the processor, at least one anomaly by validating the values of the one or more observation metrics; and
remediating (322), by the processor, the detected at least one anomaly, comprising:
identifying (324), by the processor, at least one automated remediation action comprising sequence of instructions, and
executing (326), by the processor, the identified at least one automated remediation action causing the remediation of the detected at least one anomaly.

2. The computer implemented method of claim 1, wherein determining (306) the values of the one or more observation metrics comprises:
querying (308), by the processor, the one or more observation metrics of the one or more resources from a database and at least one script associated with each of the one or more observation metrics from a script repository;
executing (310), by the processor, the at least one script to fetch the values of the one or more observation metrics from the one or more resources; and
generating (312), by the processor, a metric message comprising the values of the one or more observation metrics.

3. The computer implemented method of claim 1, wherein detecting (314) the at least one anomaly by validating the values of the one or more observation metrics comprises:
parsing (316), by the processor, the metric message to obtain values of the one or more observation metrics;
comparing (318), by the processor, the values of the one or more observation metrics against a threshold value for each of the one or more observation metrics; and
determining (320), by the processor, the values of the one or more observation metrics as anomaly if the values of the one or more observation metrics breach the threshold value.

4. The computer implemented method of claim 3, wherein the threshold value is either:
a deterministic threshold value that is defined by a user; or
a non-deterministic threshold value that is determined by a trained machine learning models.

5. The computer implemented method of claim 4, wherein training the machine learning models comprises:
receiving, by the processor, metrics data from metrics data store and historic unstructured log data from log data store;
converting, by the processor, the metrics data and the historic unstructured log data to a structured format data;
extracting, by the processor, error patterns in the structured format data; and
providing, by the processor, the extracted error patterns as input to a model building engine to train the machine learning models.

6. A system (100) for automated detection and automated remediation of anomalies in a Robotic Process Automation (RPA) environment, comprising:
at least one processor (102); and
at least one memory unit (104, 106) operatively coupled to the at least one processor (102), having instructions (124) stored thereon that, when executed by the at least one processor (102), causes the at least one processor (102) to:
discover one or more resources in an RPA platform (202), wherein the one or more resources comprise one or more RPA components and one or more dependent components corresponding to the RPA components associated with the RPA platform, wherein the one or more RPA components comprise one or more of: a control tower, a bot runner, and a bot, and wherein to discover the one or more resources the processor is caused to:
load attributes of the one or more RPA components and the one or more dependent components by connecting to the RPA platform, and
query the one or more RPA components through RPA provided Application Program Interfaces, APIs, or database for the discovering the one or more RPA components onboarded or installed in the RPA environment based on the attributes;
monitor the discovered one or more resources in the RPA platform (202), wherein to monitor the discovered one or more resources, the processor is caused to:
determine values of one or more observation metrics from the one or more resources in the RPA platform (202), and
detect at least one anomaly by validating the values of the one or more observation metrics; and
remediate the detected at least one anomaly, wherein to remediate the detected at least one anomaly, the processor is caused to:
identify at least one automated remediation action comprising sequence of instructions, and
execute the identified at least one automated remediation action causing the remediation of the detected at least one anomaly.

7. The system (100) of claim 6, wherein to determine the values of the one or more observation metrics, the processor (102) is caused to:
query the one or more observation metrics of the one or more resources from a database and at least one script associated with each of the one or more observation metrics from a script repository;
execute the at least one script to fetch the values of the one or more observation metrics from the one or more resources; and
generate a metric message comprising the values of the one or more observation metrics.

8. The system (100) of claim 6, wherein to detect the at least one anomaly by validating the values of the one or more observation metrics, the processor (102) is caused to:
parse the metric message to obtain values of the one or more observation metrics;
compare the values of the one or more observation metrics against a threshold value for each of the one or more observation metrics; and
determine the values of the one or more observation metrics as anomaly if the values of the one or more observation metrics breach the threshold value.

9. The system (100) of claim 8, wherein the threshold value is either:
a deterministic threshold value that is defined by a user; or
a non-deterministic threshold value that is determined by a trained machine learning models.

10. The system (100) of claim 9, wherein to train the machine learning models, the processor (102) is caused to:
receive metrics data from metrics data store and historic unstructured log data from log data store;
convert the metrics data and the historic unstructured log data to a structured format data;
extract error patterns in the structured format data; and
provide the extracted error patterns as input to a model building engine (238) to train the machine learning models.

11. A non-transitory computer readable medium having stored thereon instructions for automated detection and automated remediation of anomalies in a Robotic Process Automation, RPA, environment, the non-transitory computer readable medium comprising machine executable code which when executed by at least one processor, causes the at least one processor to perform steps comprising:
discovering (302), by a processor, one or more resources in an RPA platform, wherein the one or more resources comprise one or more RPA components and one or more dependent components corresponding to the RPA components associated with the RPA platform, wherein the one or more RPA components comprise one or more of: a control tower, a bot runner, and a bot, and wherein the discovering (302) comprises:
loading, by the processor, attributes of the one or more RPA components and the one or more dependent components by connecting to the RPA platform, and
querying, by the processor, the one or more RPA components through RPA provided Application Program Interfaces, APIs, or database for the discovering the one or more RPA components onboarded or installed in the RPA environment based on the attributes;
monitoring (304), by the processor, the discovered one or more resources in the RPA platform, comprising:
determining (306), by the processor, values of one or more observation metrics from the one or more resources in the RPA platform, and
detecting (314), by the processor, at least one anomaly by validating the values of the one or more observation metrics; and
remediating (322), by the processor, the detected at least one anomaly, comprising:
identifying (324), by the processor, at least one automated remediation action comprising sequence of instructions, and
executing (326), by the processor, the identified at least one automated remediation action causing the remediation of the detected at least one anomaly.

12. The non-transitory computer readable medium of claim 11, wherein determining (306) the values of the one or more observation metrics, comprises:
querying (308), by the processor, the one or more observation metrics of the one or more resources from a database and at least one script associated with each of the one or more observation metrics from a script repository;
executing (310), by the processor, the at least one script to fetch the values of the one or more observation metrics from the one or more resources; and
generating (312), by the processor, a metric message comprising the values of the one or more observation metrics.

13. The non-transitory computer readable medium of claim 11, wherein detecting (314) the at least one anomaly by validating the values of the one or more observation metrics comprises:
parsing (316), by the processor, the metric message to obtain values of the one or more observation metrics;
comparing (318), by the processor, the values of the one or more observation metrics against a threshold value for each of the one or more observation metrics; and
determining (320), by the processor, the values of the one or more observation metrics as anomaly if the values of the one or more observation metrics breach the threshold value.

14. The non-transitory computer readable medium of claim 13, wherein the threshold value is either:
a deterministic threshold value that is defined by a user; or
a non-deterministic threshold value that is determined by a trained machine learning models.

15. The non-transitory computer readable medium of claim 14, wherein training the machine learning models comprises:
receiving, by the processor, metrics data from metrics data store and historic unstructured log data from log data store;
converting, by the processor, the metrics data and the historic unstructured log data to a structured format data;
extracting, by the processor, error patterns in the structured format data; and
providing, by the processor, the extracted error patterns as input to a model building engine to train the machine learning models.

## Patentansprüche

1. Computerimplementiertes Verfahren zur automatisierten Erkennung und automatisierten Behebung von Anomalien in einer Umgebung robotergestützter Prozessautomatisierung, RPA-Umgebung, umfassend:
Feststellen (302), durch einen Prozessor, einer oder mehrerer Ressourcen auf einer RPA-Plattform, wobei die eine oder mehreren Ressourcen eine oder mehrere RPA-Komponenten und eine oder mehrere abhängige Komponenten umfassen, die den RPA-Komponenten entsprechen, die der RPA-Plattform zugeordnet sind, wobei die eine oder mehreren RPA-Komponenten eines oder mehrere von Folgenden umfassen: einen Control-Tower, einen Bot-Runner und einen Bot, und wobei das Feststellen (302) Folgendes umfasst:
Laden, durch den Prozessor, von Attributen der einen oder mehreren RPA-Komponenten und der einen oder mehreren abhängigen Komponenten durch Verbinden mit der RPA-Plattform und
Abfragen, durch den Prozessor, der einen oder mehreren RPA-Komponenten über durch die RPA bereitgestellte Anwendungsprogrammschnittstellen, API, oder Datenbanken zum Feststellen der einen oder mehreren RPA-Komponenten, die in der RPA-Umgebung eingegliedert oder installiert sind, basierend auf den Attributen;
Überwachen (304), durch den Prozessor, der einen oder der mehreren festgestellten Ressourcen auf der RPA-Plattform, umfassend:
Bestimmen (306), durch den Prozessor, von Werten einer oder mehrerer Beobachtungsmetriken von der einen oder den mehreren Ressourcen auf der RPA-Plattform und
Erkennen (314), durch den Prozessor, mindestens einer Anomalie durch Validieren der Werte der einen oder mehreren Beobachtungsmetriken; und
Beheben (322), durch den Prozessor, der erkannten mindestens einen Anomalie, umfassend:
Identifizieren (324), durch den Prozessor, mindestens einer automatisierten Behebungsmaßnahme, die eine Sequenz von Anweisungen umfasst, und
Ausführen (326), durch den Prozessor, der identifizierten mindestens einen automatisierten Behebungsmaßnahme, die die Behebung der erkannten mindestens einen Anomalie bewirkt.

2. Computerimplementiertes Verfahren nach Anspruch 1, wobei das Bestimmen (306) der Werte der einen oder der mehreren Beobachtungsmetriken Folgendes umfasst:
Abfragen (308), durch den Prozessor, der einen oder mehreren Beobachtungsmetriken der einen oder mehreren Ressourcen von einer Datenbank und mindestens eines Skripts, das jeder der einen oder mehreren Beobachtungsmetriken zugeordnet ist, von einem Skript-Repository;
Ausführen (310), durch den Prozessor, des mindestens einen Skripts, um die Werte der einen oder mehreren Beobachtungsmetriken von der einen oder mehreren Ressourcen abzurufen; und
Erzeugen (312), durch den Prozessor, einer Metriknachricht, die die Werte der einen oder mehreren Beobachtungsmetriken umfasst.

3. Computerimplementiertes Verfahren nach Anspruch 1, wobei das Erkennen (314) der mindestens einen Anomalie durch Validieren der Werte der einen oder der mehreren Beobachtungsmetriken Folgendes umfasst:
Parsen (316), durch den Prozessor, der Metriknachricht, um Werte der einen oder mehreren Beobachtungsmetriken zu erlangen;
Vergleichen (318), durch den Prozessor, der Werte der einen oder mehreren Beobachtungsmetriken mit einem Schwellenwert für jede der einen oder mehreren Beobachtungsmetriken; und
Bestimmen (320), durch den Prozessor, der Werte der einen oder mehreren Beobachtungsmetriken als Anomalie, falls die Werte der einen oder mehreren Beobachtungsmetriken den Schwellenwert verletzen.

4. Computerimplementiertes Verfahren nach Anspruch 3, wobei der Schwellenwert entweder Folgendes ist:
ein deterministischer Schwellenwert, der durch einen Benutzer definiert wird; oder
ein nicht deterministischer Schwellenwert, der durch ein trainierte Modelle für maschinelles Lernen bestimmt wird.

5. Computerimplementiertes Verfahren nach Anspruch 4, wobei das Trainieren der Modelle für maschinelles Lernen Folgendes umfasst:
Empfangen, durch den Prozessor, von Metrikdaten aus dem Metrikdatenspeicher und historischen unstrukturierten Protokolldaten aus dem Protokolldatenspeicher;
Umwandeln, durch den Prozessor, der Metrikdaten und der historischen unstrukturierten Protokolldaten in ein Daten strukturierten Formats;
Extrahieren, durch den Prozessor, von Fehlermustern in den Daten strukturierten Formats; und
Bereitstellen, durch den Prozessor, der extrahierten Fehlermuster als Eingabe in eine Modellerstellungsmaschine, um die Modelle für maschinelles Lernen zu trainieren.

6. System (100) zur automatisierten Erkennung und automatisierten Behebung von Anomalien in einer Umgebung robotergestützter Prozessautomatisierung, RPA-Umgebung, umfassend:
mindestens einen Prozessor (102); und
mindestens eine Speichereinheit (104, 106), die mit dem mindestens einen Prozessor (102) wirkverbunden ist und auf der Anweisungen (124) gespeichert sind, die, wenn sie durch den mindestens einen Prozessor (102) ausgeführt werden, den mindestens einen Prozessor (102) zu Folgendem veranlassen:
Feststellen einer oder mehrerer Ressourcen auf einer RPA-Plattform (202), wobei die eine oder mehreren Ressourcen eine oder mehrere RPA-Komponenten und eine oder mehrere abhängige Komponenten umfassen, die den RPA-Komponenten entsprechen, die der RPA-Plattform zugeordnet sind, wobei die eine oder mehreren RPA-Komponenten eines oder mehrere von Folgenden umfassen: einen Control-Tower, einen Bot-Runner und einen Bot, und wobei zum Feststellen der einen oder mehreren Ressourcen der Prozessor zu Folgendem veranlasst wird:
Laden von Attributen der einen oder mehreren RPA-Komponenten und der einen oder mehreren abhängigen Komponenten durch Verbinden mit der RPA-Plattform und
Abfragen der einen oder mehreren RPA-Komponenten über durch die RPA bereitgestellte Anwendungsprogrammschnittstellen, API, oder Datenbanken zum Feststellen der einen oder mehreren RPA-Komponenten, die in der RPA-Umgebung eingegliedert oder installiert sind, basierend auf den Attributen;
Überwachen der einen oder mehreren festgestellten Ressourcen auf der RPA-Plattform (202), wobei zum Überwachen der einen oder mehreren festgestellten Ressourcen der Prozessor zu Folgendem veranlasst wird:
Bestimmen von Werten einer oder mehrerer Beobachtungsmetriken von der einen oder den mehreren Ressourcen auf der RPA-Plattform (202) und
Erkennen mindestens einer Anomalie durch Validieren der Werte der einen oder mehreren Beobachtungsmetriken; und
Beheben der erkannten mindestens einen Anomalie, wobei zum Beheben der erkannten mindestens einen Anomalie der Prozessor zu Folgendem veranlasst wird:
Identifizieren mindestens einer automatisierten Behebungsmaßnahme, die eine Sequenz von Anweisungen umfasst, und
Ausführen der identifizierten mindestens einen automatisierten Behebungsmaßnahme, die die Behebung der erkannten mindestens einen Anomalie bewirkt.

7. System (100) nach Anspruch 6, wobei zum Bestimmen der Werte der einen oder der mehreren Beobachtungsmetriken der Prozessor (102) zu Folgendem veranlasst wird:
Abfragen der einen oder mehreren Beobachtungsmetriken der einen oder mehreren Ressourcen von einer Datenbank und mindestens eines Skripts, das jeder der einen oder mehreren Beobachtungsmetriken zugeordnet ist, von einem Skript-Repository;
Ausführen des mindestens einen Skripts, um die Werte der einen oder mehreren Beobachtungsmetriken von der einen oder mehreren Ressourcen abzurufen; und
Erzeugen einer Metriknachricht, die die Werte der einen oder mehreren Beobachtungsmetriken umfasst.

8. System (100) nach Anspruch 6, wobei zum Erkennen der mindestens einen Anomalie durch Validieren der Werte der einen oder der mehreren Beobachtungsmetriken der Prozessor (102) zu Folgendem veranlasst wird:
Parsen der Metriknachricht, um Werte der einen oder mehreren Beobachtungsmetriken zu erlangen;
Vergleichen der Werte der einen oder mehreren Beobachtungsmetriken mit einem Schwellenwert für jede der einen oder mehreren Beobachtungsmetriken; und
Bestimmen der Werte der einen oder mehreren Beobachtungsmetriken als Anomalie, falls die Werte der einen oder mehreren Beobachtungsmetriken den Schwellenwert verletzen.

9. System (100) nach Anspruch 8, wobei der Schwellenwert entweder Folgendes ist:
ein deterministischer Schwellenwert, der durch einen Benutzer definiert wird; oder
ein nicht deterministischer Schwellenwert, der durch ein trainierte Modelle für maschinelles Lernen bestimmt wird.

10. System (100) nach Anspruch 9, wobei zum Trainieren der Modelle für maschinelles Lernen der Prozessor (102) zu Folgendem veranlasst wird:
Empfangen von Metrikdaten aus dem Metrikdatenspeicher und historischen unstrukturierten Protokolldaten aus dem Protokolldatenspeicher;
Umwandeln der Metrikdaten und der historischen unstrukturierten Protokolldaten in ein Daten strukturierten Formats;
Extrahieren von Fehlermustern in den Daten strukturierten Formats; und
Bereitstellen der extrahierten Fehlermuster als Eingabe in eine Modellerstellungsmaschine (238), um die Modelle für maschinelles Lernen zu trainieren.

11. Nicht flüchtiges computerlesbares Medium, auf dem Anweisungen zur automatischen Erkennung und automatischen Behebung von Anomalien in einer Umgebung robotergestützter Prozessautomatisierung, RPA-Umgebung, gespeichert sind, wobei das nicht flüchtige computerlesbare Medium einen maschinenausführbaren Code umfasst, der, wenn er durch mindestens einen Prozessor ausgeführt wird, den mindestens einen Prozessor dazu veranlasst, Schritte durchzuführen, die Folgendes umfassen:
Feststellen (302), durch einen Prozessor, einer oder mehrerer Ressourcen auf einer RPA-Plattform, wobei die eine oder mehreren Ressourcen eine oder mehrere RPA-Komponenten und eine oder mehrere abhängige Komponenten umfassen, die den RPA-Komponenten entsprechen, die der RPA-Plattform zugeordnet sind, wobei die eine oder mehreren RPA-Komponenten eines oder mehrere von Folgenden umfassen: einen Control-Tower, einen Bot-Runner und einen Bot, und wobei das Feststellen (302) Folgendes umfasst:
Laden, durch den Prozessor, von Attributen der einen oder mehreren RPA-Komponenten und der einen oder mehreren abhängigen Komponenten durch Verbinden mit der RPA-Plattform und
Abfragen, durch den Prozessor, der einen oder mehreren RPA-Komponenten über durch die RPA bereitgestellte Anwendungsprogrammschnittstellen, API, oder Datenbanken zum Feststellen der einen oder mehreren RPA-Komponenten, die in der RPA-Umgebung eingegliedert oder installiert sind, basierend auf den Attributen;
Überwachen (304), durch den Prozessor, der einen oder der mehreren festgestellten Ressourcen auf der RPA-Plattform, umfassend:
Bestimmen (306), durch den Prozessor, von Werten einer oder mehrerer Beobachtungsmetriken von der einen oder den mehreren Ressourcen auf der RPA-Plattform und
Erkennen (314), durch den Prozessor, mindestens einer Anomalie durch Validieren der Werte der einen oder mehreren Beobachtungsmetriken; und
Beheben (322), durch den Prozessor, der erkannten mindestens einen Anomalie, umfassend:
Identifizieren (324), durch den Prozessor, mindestens einer automatisierten Behebungsmaßnahme, die eine Sequenz von Anweisungen umfasst, und
Ausführen (326), durch den Prozessor, der identifizierten mindestens einen automatisierten Behebungsmaßnahme, die die Behebung der erkannten mindestens einen Anomalie bewirkt.

12. Nicht flüchtiges computerlesbares Medium nach Anspruch 11, wobei das Bestimmen (306) der Werte der einen oder der mehreren Beobachtungsmetriken Folgendes umfasst:
Abfragen (308), durch den Prozessor, der einen oder mehreren Beobachtungsmetriken der einen oder mehreren Ressourcen von einer Datenbank und mindestens eines Skripts, das jeder der einen oder mehreren Beobachtungsmetriken zugeordnet ist, von einem Skript-Repository;
Ausführen (310), durch den Prozessor, des mindestens einen Skripts, um die Werte der einen oder mehreren Beobachtungsmetriken von der einen oder mehreren Ressourcen abzurufen; und
Erzeugen (312), durch den Prozessor, einer Metriknachricht, die die Werte der einen oder mehreren Beobachtungsmetriken umfasst.

13. Nicht flüchtiges computerlesbares Medium nach Anspruch 11, wobei das Erkennen (314) der mindestens einen Anomalie durch Validieren der Werte der einen oder der mehreren Beobachtungsmetriken Folgendes umfasst:
Parsen (316), durch den Prozessor, der Metriknachricht, um Werte der einen oder mehreren Beobachtungsmetriken zu erlangen;
Vergleichen (318), durch den Prozessor, der Werte der einen oder mehreren Beobachtungsmetriken mit einem Schwellenwert für jede der einen oder mehreren Beobachtungsmetriken; und
Bestimmen (320), durch den Prozessor, der Werte der einen oder mehreren Beobachtungsmetriken als Anomalie, falls die Werte der einen oder mehreren Beobachtungsmetriken den Schwellenwert verletzen.

14. Nicht flüchtiges computerlesbares Medium nach Anspruch 13, wobei der Schwellenwert entweder Folgendes ist:
ein deterministischer Schwellenwert, der durch einen Benutzer definiert wird; oder
ein nicht deterministischer Schwellenwert, der durch ein trainierte Modelle für maschinelles Lernen bestimmt wird.

15. Nicht flüchtiges computerlesbares Medium nach Anspruch 14, wobei das Trainieren der Modelle für maschinelles Lernen Folgendes umfasst:
Empfangen, durch den Prozessor, von Metrikdaten aus dem Metrikdatenspeicher und historischen unstrukturierten Protokolldaten aus dem Protokolldatenspeicher;
Umwandeln, durch den Prozessor, der Metrikdaten und der historischen unstrukturierten Protokolldaten in ein Daten strukturierten Formats;
Extrahieren, durch den Prozessor, von Fehlermustern in den Daten strukturierten Formats; und
Bereitstellen, durch den Prozessor, der extrahierten Fehlermuster als Eingabe in eine Modellerstellungsmaschine, um die Modelle für maschinelles Lernen zu trainieren.

## Revendications

1. Procédé mis en œuvre par ordinateur pour la détection automatisée et la réparation automatisée d'anomalies dans un environnement d'automatisation de processus robotique, RPA, comprenant :
la découverte (302), par un processeur, d'une ou plusieurs ressources dans une plate-forme RPA, ladite ou lesdites ressources comprenant un ou plusieurs composants RPA et un ou plusieurs composants dépendants correspondant aux composants RPA associés à la plate-forme RPA, ledit ou lesdits composants RPA comprenant un ou plusieurs parmi : une tour de contrôle, un agent d'exécution de bot et un bot, et ladite découverte (302) comprenant :
le chargement, par le processeur, d'attributs du ou des composants RPA et du ou des composants dépendants en se connectant à la plate-forme RPA, et
l'interrogation, par le processeur, du ou des composants RPA par l'intermédiaire des interfaces de programme d'application, API, ou d'une base de données fournies par RPA pour la découverte du ou des composants RPA embarqués ou installés dans l'environnement RPA sur la base des attributs ;
la surveillance (304), par le processeur, de la ou des ressources découvertes dans la plate-forme RPA, comprenant :
la détermination (306), par le processeur, de valeurs d'une ou de plusieurs mesures d'observation provenant de la ou des ressources dans la plate-forme RPA, et
la détection (314), par le processeur, d'au moins une anomalie par validation des valeurs de la ou des mesures d'observation ; et
la réparation (322), par le processeur, de l'au moins une anomalie détectée, comprenant :
l'identification (324), par le processeur, d'au moins une action de réparation automatisée comprenant une séquence d'instructions, et
l'exécution (326), par le processeur, de l'au moins une action de réparation automatisée identifiée entraînant la réparation de l'au moins une anomalie détectée.

2. Procédé mis en œuvre par ordinateur de la revendication 1, ladite détermination (306) des valeurs de la ou des mesures d'observation comprenant :
l'interrogation (308), par le processeur, de la ou des mesures d'observation de la ou des ressources provenant d'une base de données et d'au moins un script associé à chacune de la ou des mesures d'observation provenant d'un référentiel de scripts ;
l'exécution (310), par le processeur, du au moins un script pour extraire les valeurs de la ou des mesures d'observation de la ou des ressources ; et
la génération (312), par le processeur, d'un message de mesure comprenant les valeurs de la ou des mesures d'observation.

3. Procédé mis en œuvre par ordinateur de la revendication 1, ladite détection (314) de l'au moins une anomalie par validation des valeurs de la ou des mesures d'observation comprenant :
l'analyse (316), par le processeur, du message de mesure pour obtenir des valeurs de la ou des mesures d'observation ;
la comparaison (318), par le processeur, des valeurs de la ou des mesures d'observation à une valeur de seuil pour chacune de la ou des mesures d'observation ; et
la détermination (320), par le processeur, des valeurs de la ou des mesures d'observation en tant qu'anomalie si les valeurs de la ou des mesures d'observation franchissent la valeur de seuil.

4. Procédé mis en œuvre par ordinateur de la revendication 3, ladite valeur de seuil étant :
une valeur de seuil déterministe qui est définie par un utilisateur ; ou
une valeur de seuil non déterministe qui est déterminée par des modèles d'apprentissage automatique formés.

5. Procédé mis en œuvre par ordinateur de la revendication 4, ladite formation des modèles d'apprentissage automatique comprenant :
la réception, par le processeur, de données de mesure provenant du magasin de données de mesure et de données de journal non structurées historiques provenant du magasin de données de journal ;
la conversion, par le processeur, des données de mesures et des données de journal non structurées historiques en données de format structurées ;
l'extraction, par le processeur, de motifs d'erreur dans les données de format structurées ; et
la fourniture, par le processeur, des motifs d'erreur extraits en tant qu'entrée dans un moteur de construction de modèle pour entraîner les modèles d'apprentissage automatique.

6. Système (100) pour la détection automatisée et la réparation automatisée d'anomalies dans un environnement d'automatisation de processus robotique (RPA), comprenant :
au moins un processeur (102) ; et
au moins une unité de mémoire (104, 106) couplée fonctionnellement à l'au moins un processeur (102), sur laquelle sont stockées des instructions (124) qui, lorsqu'elles sont exécutées par l'au moins un processeur (102), amènent l'au moins un processeur (102) à :
découvrir une ou plusieurs ressources dans une plate-forme RPA (202), ladite ou lesdites ressources comprenant un ou plusieurs composants RPA et un ou plusieurs composants dépendants correspondant aux composants RPA associés à la plate-forme RPA, ledit ou lesdits composants RPA comprenant un ou plusieurs parmi : une tour de contrôle, un agent d'exécution de bot et un bot, et pour découvrir la ou les ressources, ledit processeur étant amené à :
charger des attributs du ou des composants RPA et du ou des composants dépendants en se connectant à la plate-forme RPA, et
interroger le ou les composants RPA par l'intermédiaire d'interfaces de programme d'application, API, ou d'une base de données fournies par RPA pour la découverte du ou des composants RPA embarqués ou installés dans l'environnement RPA sur la base des attributs ; surveiller la ou les ressources découvertes dans la plate-forme RPA (202), pour surveiller la ou les ressources découvertes, ledit processeur étant amené à :
déterminer des valeurs d'une ou plusieurs mesures d'observation à partir de la ou des ressources dans la plate-forme RPA (202), et
détecter au moins une anomalie par validation des valeurs de la ou des mesures d'observation ; et
réparer l'au moins une anomalie détectée, pour réparer l'au moins une anomalie détectée, ledit processeur étant amené à :
identifier au moins une action de réparation automatisée comprenant une séquence d'instructions, et
exécuter l'au moins une action de réparation automatisée identifiée entraînant la réparation de l'au moins une anomalie détectée.

7. Système (100) de la revendication 6, pour déterminer les valeurs de la ou des mesures d'observation, ledit processeur (102) étant amené à :
interroger la ou les mesures d'observation de la ou des ressources provenant d'une base de données et d'au moins un script associé à chacune de la ou des mesures d'observation provenant d'un référentiel de scripts ;
exécuter l'au moins un script pour extraire les valeurs de la ou des mesures d'observation de la ou des ressources ; et
générer un message de mesure comprenant les valeurs de la ou des mesures d'observation.

8. Système (100) de la revendication 6, pour détecter la au moins une anomalie par validation des valeurs de la ou des mesures d'observation, ledit processeur (102) étant amené à :
analyser le message de mesure pour obtenir des valeurs de la ou des mesures d'observation ;
comparer les valeurs de la ou des mesures d'observation à une valeur de seuil pour chacune de la ou des mesures d'observation ; et
déterminer les valeurs de la ou des mesures d'observation en tant qu'anomalie si les valeurs de la ou des mesures d'observation franchissent la valeur de seuil.

9. Système (100) de la revendication 8, ladite valeur de seuil étant :
une valeur de seuil déterministe qui est définie par un utilisateur ; ou
une valeur de seuil non déterministe qui est déterminée par des modèles d'apprentissage automatique formés.

10. Système (100) de la revendication 9, pour former les modèles d'apprentissage automatique, ledit processeur (102) étant amené à :
recevoir des données de mesure en provenance du magasin de données de mesure et des données de journal non structurées historiques en provenance du magasin de données de journal ;
convertir des données de mesures et des données de journal non structurées historiques en données de format structurées ;
extraire des motifs d'erreur dans les données de format structurées ; et
fournir les modèles d'erreur extraits en tant qu'entrée dans un moteur de construction de modèle (238) pour entraîner les modèles d'apprentissage automatique.

11. Support non transitoire lisible par ordinateur sur lequel sont stockées des instructions permettant une détection automatisée et une correction automatisée d'anomalies dans un environnement d'automatisation de processus robotique, RPA, le support non transitoire lisible par ordinateur comprenant un code exécutable par machine qui, lorsqu'il est exécuté par au moins un processeur, amène l'au moins un processeur à réaliser les étapes comprenant :
la découverte (302), par un processeur, d'une ou plusieurs ressources dans une plate-forme RPA, ladite ou lesdites ressources comprenant un ou plusieurs composants RPA et un ou plusieurs composants dépendants correspondant aux composants RPA associés à la plate-forme RPA, ledit ou lesdits composants RPA comprenant un ou plusieurs parmi : une tour de contrôle, un agent d'exécution de bot et un bot, et ladite découverte (302) comprenant :
le chargement, par le processeur, d'attributs du ou des composants RPA et du ou des composants dépendants en se connectant à la plate-forme RPA, et
l'interrogation, par le processeur, du ou des composants RPA par l'intermédiaire des interfaces de programme d'application, API, ou d'une base de données fournies par RPA pour la découverte du ou des composants RPA embarqués ou installés dans l'environnement RPA sur la base des attributs ;
la surveillance (304), par le processeur, de la ou des ressources découvertes dans la plate-forme RPA, comprenant :
la détermination (306), par le processeur, de valeurs d'une ou de plusieurs mesures d'observation provenant de la ou des ressources dans la plate-forme RPA, et
la détection (314), par le processeur, d'au moins une anomalie par validation des valeurs de la ou des mesures d'observation ; et
la réparation (322), par le processeur, de l'au moins une anomalie détectée, comprenant :
l'identification (324), par le processeur, d'au moins une action de réparation automatisée comprenant une séquence d'instructions, et
l'exécution (326), par le processeur, de l'au moins une action de réparation automatisée identifiée entraînant la réparation de l'au moins une anomalie détectée.

12. Support non transitoire lisible par ordinateur de la revendication 11, ladite détermination (306) des valeurs de la ou des mesures d'observation comprenant :
l'interrogation (308), par le processeur, de la ou des mesures d'observation de la ou des ressources provenant d'une base de données et d'au moins un script associé à chacune de la ou des mesures d'observation provenant d'un référentiel de scripts ;
l'exécution (310), par le processeur, du au moins un script pour extraire les valeurs de la ou des mesures d'observation de la ou des ressources ; et
la génération (312), par le processeur, d'un message de mesure comprenant les valeurs de la ou des mesures d'observation.

13. Support non transitoire lisible par ordinateur de la revendication 11, ladite détection (314) de l'au moins une anomalie par validation des valeurs de la ou des mesures d'observation comprenant :
l'analyse (316), par le processeur, du message de mesure pour obtenir des valeurs de la ou des mesures d'observation ;
la comparaison (318), par le processeur, des valeurs de la ou des mesures d'observation à une valeur de seuil pour chacune de la ou des mesures d'observation ; et
la détermination (320), par le processeur, des valeurs de la ou des mesures d'observation en tant qu'anomalie si les valeurs de la ou des mesures d'observation franchissent la valeur de seuil.

14. Support non transitoire lisible par ordinateur de la revendication 13, ladite valeur de seuil étant :
une valeur de seuil déterministe qui est définie par un utilisateur ; ou
une valeur de seuil non déterministe qui est déterminée par des modèles d'apprentissage automatique formés.

15. Support non transitoire lisible par ordinateur de la revendication 14, ladite formation des modèles d'apprentissage automatique comprenant :
la réception, par le processeur, de données de mesure provenant du magasin de données de mesure et de données de journal non structurées historiques provenant du magasin de données de journal ;
la conversion, par le processeur, des données de mesures et des données de journal non structurées historiques en données de format structurées ;
l'extraction, par le processeur, de motifs d'erreur dans les données de format structurées ; et
la fourniture, par le processeur, des motifs d'erreur extraits en tant qu'entrée dans un moteur de construction de modèle pour entraîner les modèles d'apprentissage automatique.
